# EUROPEAN PATENT APPLICATION

(11) **EP 4 723 465 A1**
(43) Date of publication of application: **08.04.2026**
(21) Application number: 24819026.6
(22) Date of filing: 15.04.2024
(51) Int. Cl.: H02M 7/48

(54) **POWER CONVERSION DEVICE**

(30) Priority: 05.06.2023 JP 2023092590
(71) Applicant: Panasonic Intellectual Property Management Co., Ltd., Kadoma-shi, Osaka 571-0057 (JP)
(72) Inventor: HARA, Takuya, Kadoma-shi, Osaka 571-0057 (JP); HIGASHIYAMA, Koji, Kadoma-shi, Osaka 571-0057 (JP); ARAI, Yasuhiro, Kadoma-shi, Osaka 571-0057 (JP)
(74) Representative: Novagraaf International SA
(86) International application number: PCT/JP2024/014915
(87) International publication number: WO 2024/252787

(57) **Abstract**

Disclosed herein is a technique for determining in which of switching circuits hard switching has occurred in a power converter circuit. In a power converter (100), a controller (50) includes a first determiner (54) and a second determiner (55). The first determiner (54) determines a switching state in the power converter circuit (11) based on a ripple voltage included in a voltage (V15) across a regenerative capacitor (15) and a plurality of load currents (iU, iV, iW) supplied from a plurality of AC terminals (41). When the first determiner (54) has determined that hard switching have occurred in the power converter circuit (11), the second determiner (55) determines, based on the polarities of the plurality of load currents (iU, iV, iW) in a particular phase of the ripple voltage, in which of a plurality of switching circuits (10) hard switching has occurred.

## Description

### Technical Field

The present disclosure generally relates to a power converter. More particularly, the present disclosure relates to a power converter having the ability to convert DC power into AC power.

### Background Art

Patent Literature 1 discloses a resonant inverter (power converter).

In the resonant inverter of Patent Literature 1, the DC voltage of a DC voltage source is converted by an inverter unit (power converter circuit) into an AC voltage. This inverter unit has a configuration in which six main switching elements (consisting of three first switching elements and three second switching elements) are bridge-connected in three phases (namely, U-, V-, and W-phases) between a positive bus line and a negative bus line.

Also, in the resonant inverter, two voltage-dividing capacitors are connected in series between the positive bus line and the negative bus line. These two voltage-dividing capacitors serve as not only a voltage dividing means for dividing the DC voltage of the DC voltage source but also a means for generating a half of the DC voltage of the DC voltage source at a connection node between the two voltage-dividing capacitors. In addition, a resonant circuit section for performing a resonant operation while the main switching elements are switching is further provided between the two voltage-dividing capacitors and the inverter unit. This resonant circuit section is formed by connecting a series circuit of a resonant reactor (resonant inductor) and an auxiliary switch (switch) to between a connection node of the two voltage-dividing capacitors and a connection node of upper and lower arms in each of the three phases and by connecting a resonant capacitor in parallel to each of the series circuits for the three phases. The inverter unit includes three inverter arms (switching circuits). In each of the three inverter arms, a main switching element (first switching element) of an upper arm and a main switching element (second switching element) of a lower arm are connected to each other in series.

Each of the main switching elements and each of the auxiliary switches have their ON/OFF states controlled by a control unit.

In the power converter of Patent Literature 1, if an auxiliary switch connected to the resonant inductor causes a failure, for example, then each of the first switching element and second switching element connected to the auxiliary switch that has caused the failure may be hard switched. The power converter of Patent Literature 1 cannot determine in which of the plurality of switching circuits of the power converter circuit hard switching has occurred.

### Citation List

### Patent Literature

Patent Literature 1: JP 2000-32775 A

### Summary of Invention

An object of the present disclosure is to provide a power converter having the ability to determine in which of the switching circuits hard switching has occurred in the power converter circuit.

A power converter according to an aspect of the present disclosure includes a first DC terminal and a second DC terminal, a power converter circuit, a plurality of AC terminals, a plurality of switches, a plurality of resonant capacitors, at least one resonant inductor, a regenerative capacitor, and a controller. The power converter circuit includes a plurality of first switching elements and a plurality of second switching elements. In the power converter circuit, a plurality of switching circuits, in each of which one of the plurality of first switching elements and a corresponding one of the plurality of second switching elements are connected one to one in series, are connected to each other in parallel. In the power converter circuit, the plurality of first switching elements are connected to the first DC terminal, and the plurality of second switching elements are connected to the second DC terminal. The plurality of AC terminals are provided one to one for the plurality of switching circuits. Each of the plurality of AC terminals is connected to a connection node between the first switching element and the second switching element of a corresponding one of the plurality of switching circuits. The plurality of switches are provided one to one for the plurality of switching circuits. Each of the plurality of switches has a first end and a second end. Each of the plurality of switches has the first end thereof connected to the connection node between the first switching element and the second switching element of a corresponding one of the plurality of switching circuits. The plurality of resonant capacitors are provided one to one for the plurality of switches. Each of the plurality of resonant capacitors is connected between the first end of a corresponding one of the plurality of switches and the second DC terminal. The at least one resonant inductor has a third end and a fourth end. The third end of the at least one resonant inductor is connected to the second end of a corresponding one of the plurality of switches. The regenerative capacitor has a fifth end and a sixth end. The fifth end of the regenerative capacitor is connected to the second DC terminal. The sixth end of the regenerative capacitor is connected to the fourth end of the at least one resonant inductor. The controller controls respective ON/OFF states of the plurality of first switching elements, the plurality of second switching elements, and the plurality of switches. The controller includes a first determiner and a second determiner. The first determiner determines a switching state in the power converter circuit based on a ripple voltage included in a voltage across the regenerative capacitor and a plurality of load currents supplied from the plurality of AC terminals. When the first determiner has determined that hard switching have occurred in the power converter circuit, the second determiner determines, based on polarities of the plurality of load currents in a particular phase of the ripple voltage, in which of the plurality of switching circuits hard switching has occurred.

A power converter according to another aspect of the present disclosure includes a first DC terminal and a second DC terminal, a power converter circuit, a plurality of AC terminals, a plurality of switches, a plurality of resonant capacitors, at least one resonant inductor, a regenerative capacitor, and a controller. The power converter circuit includes a plurality of first switching elements and a plurality of second switching elements. In the power converter circuit, a plurality of switching circuits, in each of which one of the plurality of first switching elements and a corresponding one of the plurality of second switching elements are connected one to one in series, are connected to each other in parallel. In the power converter circuit, the plurality of first switching elements are connected to the first DC terminal, and the plurality of second switching elements are connected to the second DC terminal. The plurality of AC terminals are provided one to one for the plurality of switching circuits. Each of the plurality of AC terminals is connected to a connection node between the first switching element and the second switching element of a corresponding one of the plurality of switching circuits. The plurality of switches are provided one to one for the plurality of switching circuits. Each of the plurality of switches has a first end and a second end. Each of the plurality of switches has the first end thereof connected to the connection node between the first switching element and the second switching element of a corresponding one of the plurality of switching circuits. The plurality of resonant capacitors are provided one to one for the plurality of switches. Each of the plurality of resonant capacitors is connected between the first end of a corresponding one of the plurality of switches and the second DC terminal. The at least one resonant inductor has a third end and a fourth end. The third end of the at least one resonant inductor is connected to the second end of a corresponding one of the plurality of switches. The regenerative capacitor has a fifth end and a sixth end. The fifth end of the regenerative capacitor is connected to the second DC terminal. The sixth end of the regenerative capacitor is connected to the fourth end of the at least one resonant inductor. The controller controls respective ON/OFF states of the plurality of first switching elements, the plurality of second switching elements, and the plurality of switches. The controller includes a first determiner and a second determiner. The first determiner determines a switching state in the power converter circuit based on a ripple voltage included in a voltage across the regenerative capacitor and a plurality of load currents supplied from the plurality of AC terminals. When the first determiner has determined that hard switching have occurred in the power converter circuit, the second determiner determines, based on control signals to be respectively applied to the plurality of switches, in which of the plurality of switching circuits hard switching has occurred.

### Brief Description of Drawings

[FIG. 1] FIG. 1 is a circuit diagram of a system including a power converter according to a first embodiment;
[FIG. 2] FIG. 2A is a waveform diagram illustrating a relationship between a load current and a voltage across a regenerative capacitor in a situation where the power converter is operating properly, and FIG. 2B is a waveform diagram illustrating a relationship between a load current and a voltage across a regenerative capacitor in a situation where the power converter is operating improperly;

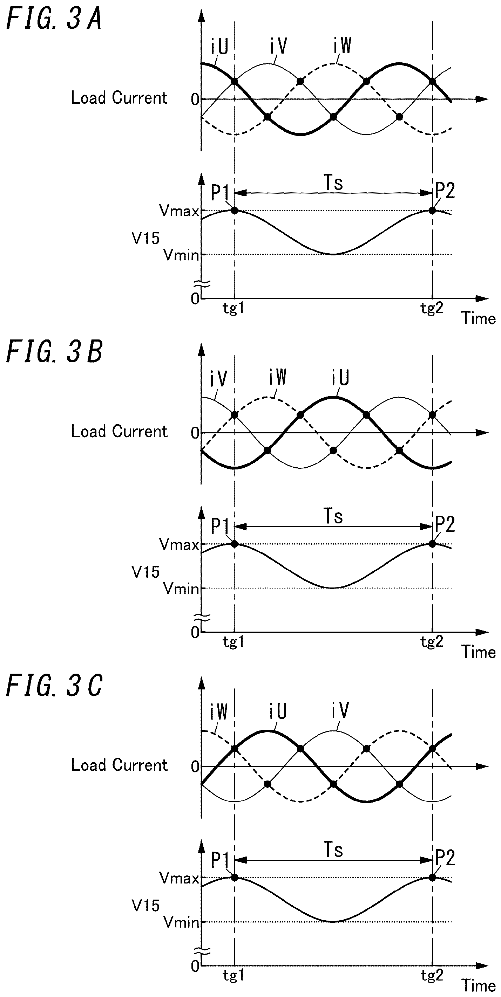

[FIG. 3] FIG. 3A is a waveform diagram illustrating a relationship between a load current and the voltage across the regenerative capacitor in a situation where a U-phase switch has caused a failure in the power converter, FIG. 3B is a waveform diagram illustrating a relationship between a load current and the voltage across the regenerative capacitor in a situation where a V-phase switch has caused a failure in the power converter, and FIG. 3C is a waveform diagram illustrating a relationship between a load current and the voltage across the regenerative capacitor in a situation where the V-phase switch has caused a failure in the power converter;
[FIG. 4] FIG. 4 illustrates how the power converter operates in a situation where hard switching has occurred in a U-phase switching circuit;
[FIG. 5] FIG. 5 is a waveform diagram illustrating a relationship between a load current and the voltage across the regenerative capacitor in a situation where a V-phase switch and a W-phase switch have caused a failure in the power converter;
[FIG. 6] FIG. 6A is a waveform diagram illustrating a relationship between a load current and the voltage across the regenerative capacitor in a situation where the power converter is operating properly, and FIG. 6B is a waveform diagram illustrating a relationship between a load current and the voltage across the regenerative capacitor in a situation where switches in U-, V-, and W-phases have caused a failure in the power converter;
[FIG. 7] FIG. 7 illustrates how the power converter operates in a situation where its controller has performed a basic operation when a load current > 0 and its resonant capacitor is subjected to a charging operation;
[FIG. 8] FIG. 8 also illustrates how the power converter operates in the situation where its controller has performed the basic operation when the load current > 0 and its resonant capacitor is subjected to the charging operation;
[FIG. 9] FIG. 9 shows how duties and load currents, respectively corresponding to three-phase voltage instructions in an AC load connected to a plurality of AC terminals of the power converter, change with time;
[FIG. 10] FIG. 10 shows a first current threshold value and a second current threshold value for use in the controller of the power converter;
[FIG. 11] FIG. 11 illustrates how the power converter operates in a situation where its controller has performed the basic operation when a load current > 0 and its resonant capacitor is subjected to a discharging operation;
[FIG. 12] FIG. 12 also illustrates how the power converter operates in a situation where its controller has performed the basic operation when the load current < 0 and its resonant capacitor is subjected to the discharging operation;
[FIG. 13] FIG. 13 illustrates how the power converter operates in a situation where its controller has performed the basic operation when the load current < 0 and its resonant capacitor is subjected to the charging operation;
[FIG. 14] FIG. 14 is a circuit diagram of a system including a power converter according to a second embodiment;
[FIG. 15] FIG. 15 illustrates how the power converter operates;
[FIG. 16] FIG. 16 illustrates how the power converter operates;
[FIG. 17] FIG. 17 is a circuit diagram of a system including a power converter according to a third embodiment;
[FIG. 18] FIG. 18 is a circuit diagram of a system including a power converter according to a fourth embodiment;
[FIG. 19] FIG. 19 is a circuit diagram of a system including a power converter according to a first variation of the fourth embodiment;
[FIG. 20] FIG. 20 is a circuit diagram of a system including a power converter according to a second variation of the fourth embodiment;
[FIG. 21] FIG. 21 is a circuit diagram of a system including a power converter according to a third variation of the fourth embodiment;
[FIG. 22] FIG. 22 is a circuit diagram of a system including a power converter according to a fourth variation of the fourth embodiment; and
[FIG. 23] FIG. 23 is a circuit diagram of a system including a power converter according to a fifth embodiment.

### Description of Embodiments

### (First embodiment)

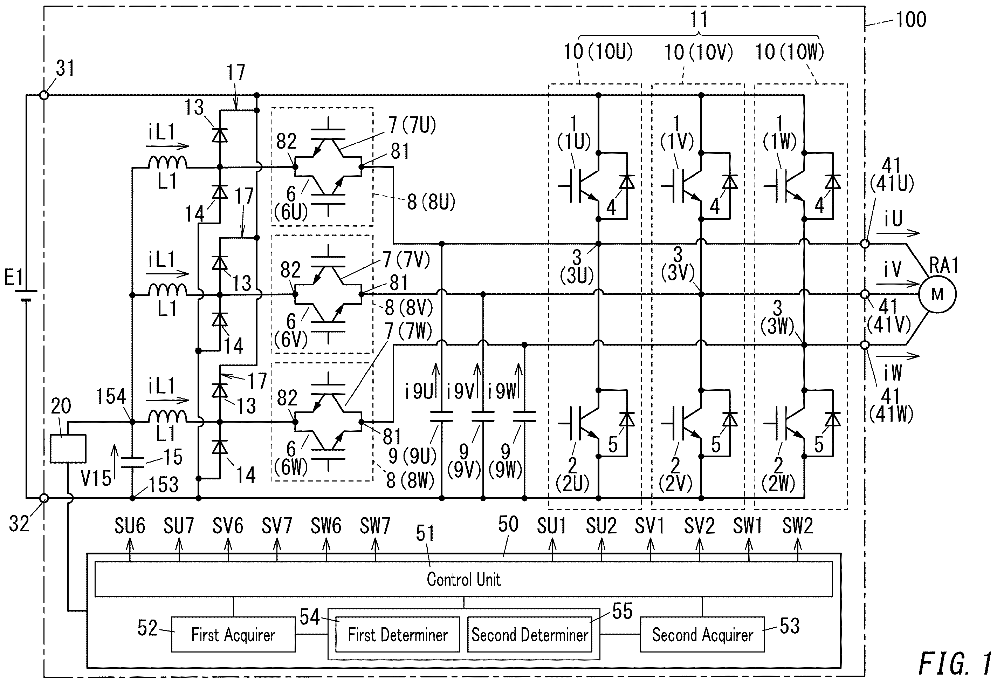

A power converter 100 according to a first embodiment will be described with reference to FIGS. 1-13.

### (1) Overall configuration for power converter

The power converter 100 includes a first DC terminal 31 and a second DC terminal 32, and a plurality of (e.g., three) AC terminals 41 as shown in FIG. 1, for example. A DC power supply E1 is connected between the first DC terminal 31 and the second DC terminal 32. An AC load RA1 is connected to the plurality of AC terminals 41. The AC load RA1 may be, for example, a three-phase motor. The power converter 100 converts the DC output of the DC power supply E1 into AC power and outputs the AC power to the AC load RA1. The DC power supply E1 may include, for example, a solar cell or a fuel cell. The DC power supply E1 may include a DC-DC converter. In the power converter 100, if the plurality of AC terminals 41 are three AC terminals 41, then the AC power may be, for example, three-phase AC power having U-, V-, and W-phases.

The power converter 100 includes a power converter circuit 11, a plurality of (e.g., three) switches 8, a plurality of (e.g., three) resonant capacitors 9, a regenerative capacitor 15, a plurality of (e.g., three) resonant inductors L1, and a controller 50. The power converter 100 further includes a plurality of (e.g., three) protection circuits 17. Each of the plurality of switches 8 may be, for example, a bidirectional switch.

The power converter circuit 11 includes a plurality of (e.g., three) first switching elements 1 and a plurality of (e.g., three) second switching elements 2. In the power converter circuit 11, a plurality of (e.g., three) switching circuits 10, in each of which one of the plurality of first switching elements 1 and a corresponding one of the plurality of second switching elements 2 are connected one to one in series, are connected to each other in parallel. In the power converter circuit 11, the plurality of first switching elements 1 are connected to the first DC terminal 31, and the plurality of second switching elements 2 are connected to the second DC terminal 32. The plurality of AC terminals 41 are provided one to one for the plurality of switching circuits 10. Each of the plurality of AC terminals 41 is connected to a connection node 3 between the first switching element 1 and the second switching element 2 of a corresponding one of the plurality of switching circuits 10. The plurality of switches 8 are provided one to one for the plurality of switching circuits 10. Each of the plurality of switches 8 has a first end 81 and a second end 82. Each of the plurality of switches 8 has the first end 81 thereof connected to the connection node 3 between the first switching element 1 and the second switching element 2 of a corresponding one of the plurality of switching circuits 10. The plurality of resonant capacitors 9 are provided one to one for the plurality of switches 8. Each of the plurality of resonant capacitors 9 is connected between the first end 81 of a corresponding one of the plurality of switches 8 and the second DC terminal 32. Each of the plurality of resonant inductors L1 has a third end and a fourth end. In each resonant inductor L1, the fourth end thereof is connected to the regenerative capacitor 15. In each of the plurality of resonant inductors L1, the third end thereof is connected to the second end 82 of a corresponding one of the plurality of switches 8. The regenerative capacitor 15 has a fifth end 153 and a sixth end 154. The fifth end 153 of the regenerative capacitor 15 is connected to the second DC terminal 32. The sixth end 154 thereof is connected to the fourth end of the resonant inductor L1. The controller 50 controls the plurality of first switching elements 1, the plurality of second switching elements 2, and the plurality of switches 8.

### (2) Details of power converter

In the following description, as for the plurality of switching circuits 10, the switching circuits 10 for the U-, V-, and W-phases will be hereinafter referred to as a "switching circuit 10U," a "switching circuit 10V," and a "switching circuit 10W," respectively, for the sake of convenience of description. Also, in the following description, the first switching element 1 and second switching element 2 of the switching circuit 10U will be hereinafter referred to as a "first switching element 1U" and a "second switching element 2U," respectively. In the same way, in the following description, the first switching element 1 and second switching element 2 of the switching circuit 10V will be hereinafter referred to as a "first switching element 1V" and a "second switching element 2V," respectively. In the same way, in the following description, the first switching element 1 and second switching element 2 of the switching circuit 10W will be hereinafter referred to as a "first switching element 1W" and a "second switching element 2W," respectively. Furthermore, in the following description, the connection node 3 between the first switching element 1U and the second switching element 2U will be hereinafter referred to as a "connection node 3U," the connection node 3 between the first switching element 1V and the second switching element 2V will be hereinafter referred to as a "connection node 3V," and the connection node 3 between the first switching element 1W and the second switching element 2W will be hereinafter referred to as a "connection node 3W." Furthermore, in the following description, the AC terminal 41 connected to the connection node 3U will be hereinafter referred to as an "AC terminal 41U," the AC terminal 41 connected to the connection node 3V will be hereinafter referred to as an "AC terminal 41V," and the AC terminal 41 connected to the connection node 3W will be hereinafter referred to as an "AC terminal 41W." Furthermore, in the following description, the resonant capacitor 9 connected to the second switching element 2U in parallel will be hereinafter referred to as a "resonant capacitor 9U," the resonant capacitor 9 connected to the second switching element 2V in parallel will be hereinafter referred to as a "resonant capacitor 9V," and the resonant capacitor 9 connected to the second switching element 2W in parallel will be hereinafter referred to as a "resonant capacitor 9W." Furthermore, in the following description, the switch 8 connected to the connection node 3U will be hereinafter referred to as a "switch 8U," the switch 8 connected to the connection node 3V will be hereinafter referred to as a "switch 8V," and the switch 8 connected to the connection node 3W will be hereinafter referred to as a "switch 8W."

In the power converter 100, the higher-potential output terminal (positive electrode) of the DC power supply E1 may be connected to the first DC terminal 31, and the lower-potential output terminal (negative electrode) of the DC power supply E1 may be connected to the second DC terminal 32, for example. Also, in the power converter 100, the U-, V-, and W-phase terminals of the AC load RA1 may be connected to the three AC terminals 41U, 41V, and 41W, respectively, for example.

In the power converter circuit 11, each of the plurality of (e.g., three) first switching elements 1 and the plurality of (e.g., three) second switching elements 2 has a control terminal, a first main terminal, and a second main terminal. The respective control terminals of the plurality of first switching elements 1 and the plurality of second switching elements 2 are connected to the controller 50. In each of the plurality of switching circuits 10 of the power converter 100, the first main terminal of the first switching element 1 is connected to the first DC terminal 31, the second main terminal of the first switching element 1 is connected to the first main terminal of the second switching element 2, and the second main terminal of the second switching element 2 is connected to the second DC terminal 32. In each of the plurality of switching circuits 10, the first switching element 1 is a high-side switching element (P-side switching element) and the second switching element 2 is a low-side switching element (N-side switching element). Each of the plurality of first switching elements 1 and the plurality of second switching elements 2 may be, for example, an insulated gate bipolar transistor (IGBT). Thus, in each of the plurality of first switching elements 1 and the plurality of second switching elements 2, the control terminal, the first main terminal, and the second main terminal thereof are a gate terminal, a collector terminal, and an emitter terminal, respectively.

The power converter circuit 11 further includes a plurality of (e.g., three) first diodes 4 which are connected one to one to the plurality of (e.g., three) first switching elements 1 in antiparallel and a plurality of (e.g., three) second diodes 5 which are connected one to one to the plurality of (e.g., three) second switching elements 2 in antiparallel. In each of the plurality of first diodes 4, the anode of the first diode 4 is connected to the second main terminal (emitter terminal) of the first switching element 1 corresponding to the first diode 4, and the cathode of the first diode 4 is connected to the first main terminal (collector terminal) of the first switching element 1 corresponding to the first diode 4. In each of the plurality of second diodes 5, the anode of the second diode 5 is connected to the second main terminal (emitter terminal) of the second switching element 2 corresponding to the second diode 5, and the cathode of the second diode 5 is connected to the first main terminal (collector terminal) of the second switching element 2 corresponding to the second diode 5.

The U-phase terminal of the AC load RA1 may be connected, for example, to the connection node 3U between the first switching element 1U and the second switching element 2U via the AC terminal 41U. The V-phase terminal of the AC load RA1 may be connected, for example, to the connection node 3V between the first switching element 1V and the second switching element 2V via the AC terminal 41V The W-phase terminal of the AC load RA1 may be connected, for example, to the connection node 3W between the first switching element 1W and the second switching element 2W via the AC terminal 41W.

The plurality of resonant capacitors 9 are provided one to one for the plurality of switches 8. Each of the plurality of resonant capacitors 9 is connected between the first end 81 of a corresponding one of the plurality of switches 8 and the second DC terminal 32. The power converter 100 includes a plurality of resonant circuits. Each of the plurality of resonant circuits includes a corresponding one of the resonant capacitors 9 and a corresponding one of the resonant inductors L1.

Each of the plurality of switches 8 may include, for example, two IGBTs, namely, a first IGBT 6 and a second IGBT 7, which are connected together in antiparallel. In each of the plurality of switches 8, the collector terminal of the first IGBT 6 and the emitter terminal of the second IGBT 7 are connected to each other and the emitter terminal of the first IGBT 6 and the collector terminal of the second IGBT 7 are connected to each other. In each of the plurality of switches 8, the emitter terminal of the first IGBT 6 is connected to the connection node 3 of the switching circuit 10 corresponding to the switch 8 including the first IGBT 6. In each of the plurality of switches 8, the collector terminal of the second IGBT 7 is connected to the connection node 3 of the switching circuit 10 corresponding to the switch 8 including the second IGBT 7. The switch 8U is connected to the connection node 3U between the first switching element 1U and the second switching element 2U. The switch 8V is connected to the connection node 3V between the first switching element 1V and the second switching element 2V. The switch 8W is connected to the connection node 3W between the first switching element 1W and the second switching element 2W. In the following description, the first IGBT 6 and second IGBT 7 of the switch 8U will be hereinafter referred to as a "first IGBT 6U" and a "second IGBT 7U," respectively, the first IGBT 6 and second IGBT 7 of the switch 8V will be hereinafter referred to as a "first IGBT 6V" and a "second IGBT 7V," respectively, and the first IGBT 6 and second IGBT 7 of the switch 8W will be hereinafter referred to as a "first IGBT 6W" and a "second IGBT 7W," respectively, for the sake of convenience of description.

The plurality of switches 8 are controlled by the controller 50. In other words, the first IGBT 6U, the second IGBT 7U, the first IGBT 6V, the second IGBT 7V, the first IGBT 6W, and the second IGBT 7W are controlled by the controller 50.

Each of the plurality of resonant inductors L1 has a third end and a fourth end. In each of the plurality of resonant inductors L1, the third end thereof is connected to the second end 82 of a corresponding one of the plurality of switches 8. The respective fourth ends of the plurality of resonant inductors L1 are connected to the sixth end 154 of the regenerative capacitor 15. The respective inductances of the plurality of resonant inductors L1 are equal to each other. That is to say, the respective inductances of the three resonant inductors L1 are equal to each other. As used herein, the expression "the respective inductances of the three resonant inductors L1 are equal to each other" refers to not only a situation where the respective inductances of two out of the three resonant inductors L1 are exactly equal to the inductance of the other resonant inductor L1 but also a situation where the inductance of each of the two resonant inductors L1 is equal to or greater than 95% and equal to or less than 105% of the inductance of the other resonant inductor L1.

The regenerative capacitor 15 is connected between the respective fourth ends of the plurality of resonant inductors L1 and the second DC terminal 32. The regenerative capacitor 15 may be, for example, a film capacitor.

Each of the plurality of protection circuits 17 includes a third diode 13 and a fourth diode 14. In each of the plurality of protection circuits 17, the third diode 13 is connected between the connection node where its corresponding resonant inductor L1 and its corresponding switch 8 are connected to each other and the first DC terminal 31. In the third diode 13, the anode of the third diode 13 is connected to the connection node between the resonant inductor L1 and the switch 8. In the third diode 13, the cathode of the third diode 13 is connected to the first DC terminal 31. The fourth diode 14 is connected between the connection node where its corresponding resonant inductor L1 and its corresponding switch 8 are connected to each other and the second DC terminal 32. In the fourth diode 14, the anode of the fourth diode 14 is connected to the second DC terminal 32. In the fourth diode 14, the cathode of the fourth diode 14 is connected to the connection node between the resonant inductor L1 and the switch 8. Thus, in each of the plurality of protection circuits 17, the fourth diode 14 is connected to the third diode 13 in series.

The controller 50 controls the plurality of first switching elements 1, the plurality of second switching elements 2, and the plurality of switches 8.

The controller 50 outputs control signals SU1, SV1, SW1 for controlling the ON/OFF states of the plurality of first switching elements 1U, 1V, 1W, respectively. Each of the control signals SU1, SV1, SW1 may be, for example, a pulse width modulation (PWM) signal having, for example, a potential level that alternates between a first potential level (hereinafter referred to as a "low level") and a second potential level (hereinafter referred to as a "high level") higher than the first potential level. The first switching elements 1U, 1V, 1W are ON when their respective control signals SU1, SV1, SW1 have high level and are OFF when their respective control signals SU1, SV1, SW1 have low level. In addition, the controller 50 also outputs control signals SU2, SV2, SW2 for controlling the ON/OFF states of the plurality of second switching elements 2U, 2V, 2W, respectively. Each of the control signals SU2, SV2, SW2 may be, for example, a PWM signal having, for example, a potential level that alternates between the first potential level (hereinafter referred to as a "low level") and the second potential level (hereinafter referred to as a "high level") higher than the first potential level. The second switching elements 2U, 2V, 2W are ON when their respective control signals SU2, SV2, SW2 have high level and are OFF when their respective control signals SU2, SV2, SW2 have low level.

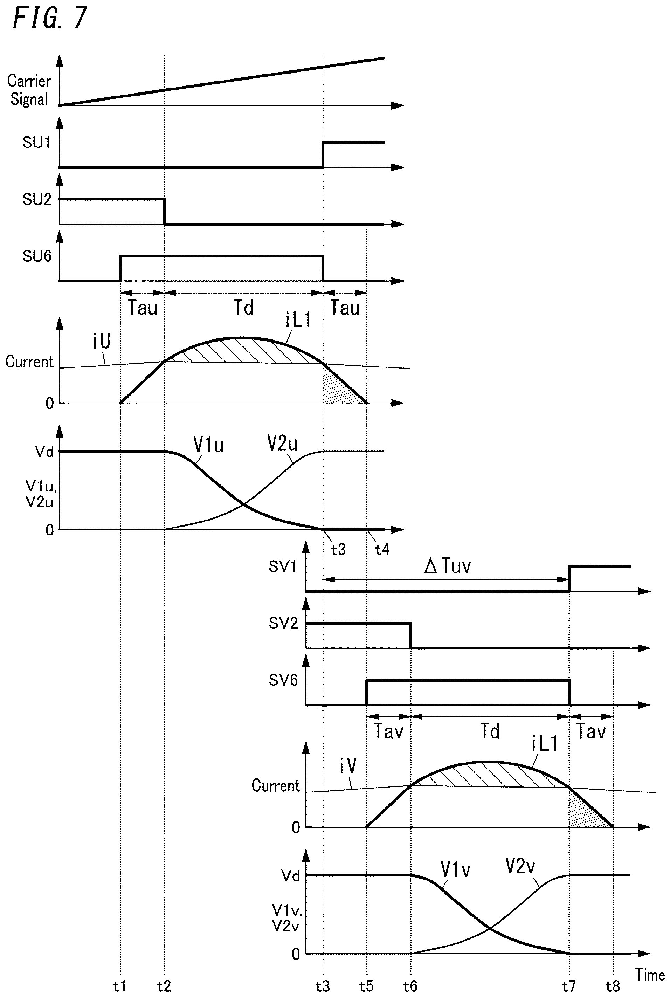

The controller 50 generates, using a carrier signal (refer to FIG. 7) having a saw-tooth waveform, the control signals SU1, SV1, SW1 for the plurality of first switching elements 1U, 1V, 1W, respectively, and the control signals SU2, SV2, SW2 for the plurality of second switching elements 2U, 2V, 2W, respectively. More specifically, the controller 50 generates, based on at least the carrier signal and a U-phase voltage instruction, the control signals SU1, SU2 to be applied to the first switching element 1U and the second switching element 2U, respectively. Also, the controller 50 generates, based on at least the carrier signal and a V-phase voltage instruction, the control signals SV1, SV2 to be applied to the first switching element 1V and the second switching element 2V, respectively. Furthermore, the controller 50 generates, based on at least the carrier signal and a W-phase voltage instruction, the control signals SW1, SW2 to be applied to the first switching element 1W and the second switching element 2W, respectively. The U-phase voltage instruction, the V-phase voltage instruction, and the W-phase voltage instruction may be, for example, sinusoidal wave signals, of which the phases are different from each other by 120 degrees and of which the value (voltage instruction value) changes with time. Note that the waveform of the carrier signal does not have to be the saw-tooth waveform but may also be a triangular waveform or a mirror-reversed version of the saw-tooth waveform shown in FIG. 7. Also, the U-phase voltage instruction, the V-phase voltage instruction, and the W-phase voltage instruction each have one cycle of the same length. In addition, one cycle of the U-phase voltage instruction, the V-phase voltage instruction, and the W-phase voltage instruction is longer than one cycle of the carrier signal.

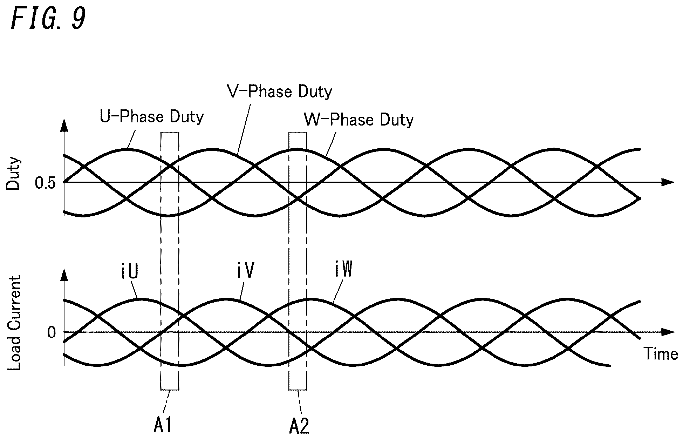

The duty of the control signals SU1, SU2 to be applied from the controller 50 to the first switching element 1U and the second switching element 2U, respectively, varies in accordance with the U-phase voltage instruction. In FIG. 9, the duty of the control signal SU1 is shown as a "U-phase duty." The controller 50 (refer to FIG. 1) generates the control signal SU1 to be applied to the first switching element 1U by comparing the U-phase voltage instruction with the carrier signal. The controller 50 generates the control signal SU2 to be applied to the second switching element 2U by inverting the control signal SU1 to be applied to the first switching element 1U. In addition, to prevent the respective ON periods of the first switching element 1U and the second switching element 2U from overlapping with each other, the controller 50 sets a dead time period Td (refer to FIG. 7) between a high-level period of the control signal SU1 and a high-level period of the control signal SU2.

The duty of the control signals SV1, SV2 to be applied from the controller 50 to the first switching element 1V and the second switching element 2V, respectively, varies in accordance with the V-phase voltage instruction. In FIG. 9, the duty of the control signal SV1 is shown as a "V-phase duty." The controller 50 (refer to FIG. 1) generates the control signal SV1 to be applied to the first switching element 1V by comparing the V-phase voltage instruction with the carrier signal. The controller 50 also generates the control signal SV2 to be applied to the second switching element 2V by inverting the control signal SV1 to be applied to the first switching element 1V. In addition, to prevent the respective ON periods of the first switching element 1V and the second switching element 2V from overlapping with each other, the controller 50 sets a dead time period Td (refer to FIG. 7) between a high-level period of the control signal SV1 and a high-level period of the control signal SV2.

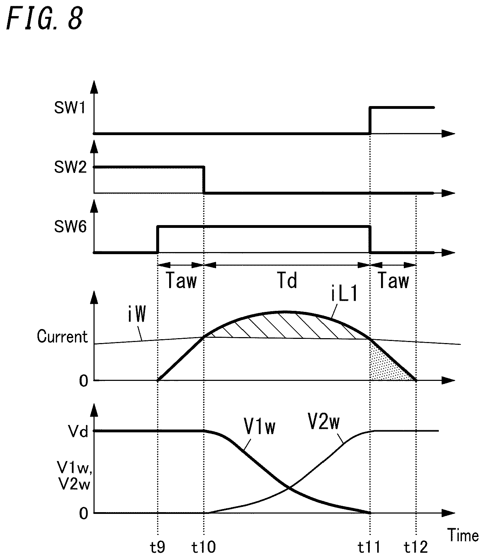

The duty of the control signals SW1, SW2 to be applied from the controller 50 to the first switching element 1W and the second switching element 2W, respectively, varies in accordance with the W-phase voltage instruction. In FIG. 9, the duty of the control signal SW1 is shown as a "W-phase duty." The controller 50 (refer to FIG. 1) generates the control signal SW1 to be applied to the first switching element 1W by comparing the W-phase voltage instruction with the carrier signal. The controller 50 generates the control signal SW2 to be applied to the second switching element 2W by inverting the control signal SW1 to be applied to the first switching element 1W. In addition, to prevent the respective ON periods of the first switching element 1W and the second switching element 2W from overlapping with each other, the controller 50 sets a dead time period Td (refer to FIG. 8) between a high-level period of the control signal SW1 and a high-level period of the control signal SW2.

The U-phase voltage instruction, the V-phase voltage instruction, and the W-phase voltage instruction may be, for example, sinusoidal wave signals, of which the phases are different from each other by 120 degrees and of which the value changes with time. Thus, the respective duties (i.e., U-, V-, and W-phase duties) of the control signals SU1, SV1, SW1 change in the form of sinusoidal waves, of which the phases are different from each other by 120 degrees, as shown in FIG. 9, for example. In the same way, the respective duties of the control signals SU2, SV2, SW2 also change in the form of sinusoidal waves, of which the phases are different from each other by 120 degrees.

The controller 50 generates the respective control signals SU1, SU2, SV1, SV2, SW1, SW2 based on the carrier signal, the respective voltage instructions, and information about the state of the AC load RA1. For example, if the AC load RA1 is a three-phase motor, the information about the state of the AC load RA1 may include, for example, detection values provided by a plurality of current sensors for respectively detecting output currents (hereinafter referred to as "load currents") iU, iV, iW flowing respectively through the U-, V-, and W-phases of the AC load RA1.

The plurality of switches 8, the plurality of resonant inductors L1, the plurality of resonant capacitors 9, and the regenerative capacitor 15 are provided to make zero-voltage soft switching of the plurality of first switching elements 1 and the plurality of second switching elements 2.

In this power converter 100, the controller 50 controls not only the plurality of first switching elements 1 and the plurality of second switching elements 2 of the power converter circuit 11 but also the plurality of switches 8 as well.

The controller 50 generates control signals SU6, SU7, SV6, SV7, SW6, SW7 for controlling the respective ON/OFF states of the first IGBT 6U, the second IGBT 7U, the first IGBT 6V, the second IGBT 7V, the first IGBT 6W, and the second IGBT 7W, respectively, and outputs the control signals SU6, SU7, SV6, SV7, SW6, SW7 to the respective gate terminals of the first IGBT 6U, the second IGBT 7U, the first IGBT 6V, the second IGBT 7V, the first IGBT 6W, and the second IGBT 7W.

If the first IGBT 6U is ON and the second IGBT 7U is OFF, the switch 8U allows a charging current that flows through the regenerative capacitor 15, the resonant inductor L1, the switch 8U, and the resonant capacitor 9U in this order to pass therethrough. The charging current is a current for charging the resonant capacitor 9U with electricity. On the other hand, if the first IGBT 6U is OFF and the second IGBT 7U is ON, the switch 8U allows a discharging current that flows through the resonant capacitor 9U, the switch 8U, the resonant inductor L1, and the regenerative capacitor 15 in this order to pass therethrough. The discharging current is a current for discharging electricity from the resonant capacitor 9U.

If the first IGBT 6V is ON and the second IGBT 7V is OFF, the switch 8V allows a charging current that flows through the regenerative capacitor 15, the resonant inductor L1, the switch 8V, and the resonant capacitor 9V in this order to pass therethrough. The charging current is a current for charging the resonant capacitor 9V with electricity. On the other hand, if the first IGBT 6V is OFF and the second IGBT 7V is ON, the switch 8V allows a discharging current that flows through the resonant capacitor 9V, the switch 8V, the resonant inductor L1, and the regenerative capacitor 15 in this order to pass therethrough. The discharging current is a current for discharging electricity from the resonant capacitor 9V.

If the first IGBT 6W is ON and the second IGBT 7W is OFF, the switch 8W allows a charging current that flows through the regenerative capacitor 15, the resonant inductor L1, the switch 8W, and the resonant capacitor 9W in this order to pass therethrough. The charging current is a current for charging the resonant capacitor 9W with electricity. On the other hand, if the first IGBT 6W is OFF and the second IGBT 7W is ON, the switch 8W allows a discharging current that flows through the resonant capacitor 9W, the switch 8W, the resonant inductor L1, and the regenerative capacitor 15 in this order to pass therethrough. The discharging current is a current for discharging electricity from the resonant capacitor 9W.

The controller 50 includes a control unit 51, a first acquirer 52, a second acquirer 53, a first determiner 54, and a second determiner 55.

The control unit 51 has the function of controlling the respective ON/OFF states of the plurality of first switching elements 1, the plurality of second switching elements 2, and the plurality of switches 8. In the controller 50, the control unit 51 has the function of generating the respective control signals SU1, SU2, SV1, SV2, SW1, SW2 based on the carrier signal, the respective voltage instructions, and information about the state of the AC load RA1. The information about the state of the AC load RA1 may include detection values provided by a plurality of current sensors for respectively detecting the load currents iU, iV, iW.

The first acquirer 52 has the function of acquiring a detection value from a voltage sensor 20 for detecting the voltage V15 across the regenerative capacitor 15.

The second acquirer 53 has the function of acquiring the detection values from the plurality of current sensors. That is to say, the second acquirer 53 has the function of acquiring the detection values of the plurality of load currents iU, iV, iW supplied from the plurality of AC terminals 41. Each of the plurality of load currents iU, iV, iW may be, for example, an AC current having a sinusoidal waveform. The respective phases of the plurality of load currents iU, iV, iW are different from each other by 120 degrees, for example.

The first determiner 54 determines a switching state in the power converter circuit 11 based on a ripple voltage included in the voltage V15 across the regenerative capacitor 15 and the plurality of load currents iU, iV, iW supplied from the plurality of AC terminals 41. As used herein, the phrase "the switching state in the power converter circuit 11" includes at least one switching state out of the respective switching states of the plurality of first switching elements 1 and the plurality of second switching elements 2. If the first determiner 54 "determines the switching state in the power converter circuit 11," this means determining whether hard switching has occurred in the power converter circuit 11. As used herein, the expression "hard switching has occurred in the power converter circuit 11" means that hard switching has occurred in at least one of the plurality of first switching elements 1 and the plurality of second switching elements 2. The operation of the first determiner 54 will be described in further detail later in the "(3.2) Operations of first determiner and second determiner" section.

When the first determiner 54 has determined that hard switching have occurred in the power converter circuit 11, the second determiner 55 determines in which of the plurality of switching circuits 10 hard switching has occurred. Specifically, the second determiner 55 determines, based on the polarities of the plurality of load currents iU, iV, iW in a particular phase of the ripple voltage included in the voltage V15 across the regenerative capacitor 15, in which of the plurality of switching circuits 10 hard switching has occurred. The operation of the second determiner 55 will be described in further detail later in the "(3.2) Operations of first determiner and second determiner" section.

The agent that performs the functions of the controller 50 includes a computer system. The computer system includes a single or a plurality of computers. The computer system includes a processor and a memory as principal hardware components thereof. The computer system serves as the agent that performs the functions of the controller 50 according to the present disclosure by making the processor execute a program stored in the memory of the computer system. The program may be stored in advance in the memory of the computer system. Alternatively, the program may also be downloaded through a telecommunications line or be distributed after having been recorded in a non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

### (3) Operation of power converter

In the following description, as for a current iL1 flowing through each resonant inductor L1, if the current flows in the direction indicated by the arrow shown in FIG. 1, then the polarity of the current iL1 is supposed to be positive. On the other hand, if the current iL1 flows in the direction opposite from the one indicated by the arrow shown in FIG. 1, then the polarity of the current iL1 is supposed to be negative. In addition, in the following description, as for each of the load currents iU, iV, iW respectively flowing through the U-, V-, and W-phases of the AC load RA1, if the load current iU, iV, iW flows in the direction indicated by a corresponding one of the arrows shown in FIG. 1, then the polarity of the load current iU, iV, iW is supposed to be positive. On the other hand, if the load current iU, iV, iW flows in the direction opposite from the one indicated by the arrow shown in FIG. 1, then the polarity of the load current iU, iV, iW is supposed to be negative. Furthermore, as for each of currents i9U, i9V, i9W flowing through the resonant capacitors 9U, 9V, 9W, respectively, if the current i9U, i9V, i9W flows in the direction indicated by a corresponding one of the arrows shown in FIG. 1, then the polarity of the current i9U, i9V, i9W is supposed to be positive. On the other hand, if the current i9U, i9V, i9W flows in the direction opposite from the one indicated by the arrow shown in FIG. 1, then the polarity of the current i9U, i9V, i9W is supposed to be negative. Thus, in the case of the discharging operation of discharging electricity from the resonant capacitor 9U, 9V, 9W, the polarity of the current i9U, i9V, i9W is positive. On the other hand, in the case of the charging operation of charging the resonant capacitor 9U, 9V, 9W with electricity, the polarity of the current i9U, i9V, i9W is negative.

The controller 50 sets, with respect to each of the plurality of switching circuits 10, a dead time period Td between a high-level period of the control signal SU1, SV1, SW1 for the first switching element 1U, 1V, 1W and a high-level period of the control signal SU2, SV2, SW2 for the second switching element 2U, 2V, 2W.

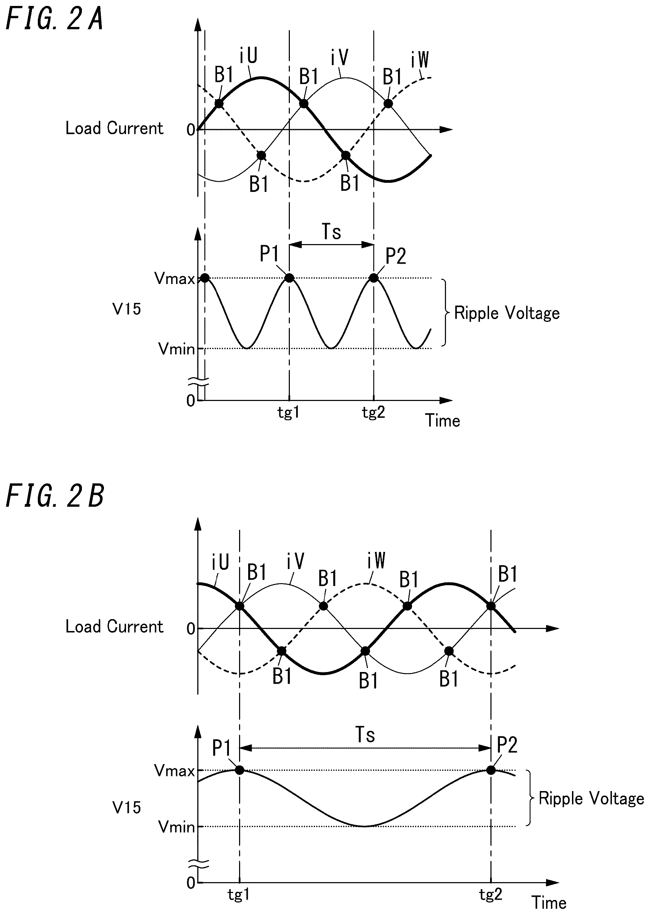

Next, a basic operation of the controller 50 to make zero-voltage soft switching of each of the plurality of first switching elements 1 and the plurality of second switching elements 2 will be described with reference to FIG. 1 and FIGS. 7-13. After that, it will be described with reference to FIGS. 2A, 2B, 3A, 3B, 3C, 4, 5, 6A, and 6B how the first determiner 54 and the second determiner 55 operate.

### (3.1) Basic operation

When the zero-voltage soft switching of the first switching element 1 is performed, the voltage across the first switching element 1 needs to be reduced to zero just before the first switching element 1 as the target of zero-voltage soft switching turns ON. When the zero-voltage soft switching of the second switching element 2 is performed, the voltage across the second switching element 2 needs to be reduced to zero just before the second switching element 2 as the target of zero-voltage soft switching turns ON. In the following description, the switching element (which is either the first switching element 1 or the second switching element 2) as the target of the zero-voltage soft switching will be hereinafter referred to as a "target switching element."

The basic operation of the controller 50 changes according to the polarity (i.e., either positive or negative) of a load current flowing through the AC terminal 41 connected to the target switching element and depending on whether the resonant capacitor 9 connected to the target switching element in series or in parallel is performing the charging operation or the discharging operation. The load current iU, iV, iW has positive polarity when flowing from the AC terminal 41 toward the AC load RA1 and has negative polarity when flowing from the AC load RA1 toward the AC terminal 41. While the resonant capacitor 9 is performing the charging operation, the voltage across the resonant capacitor 9 increases. On the other hand, while the resonant capacitor 9 is performing the discharging operation, the voltage across the resonant capacitor 9 decreases. The voltage across each of the plurality of second switching elements 2 is the same as the voltage across the resonant capacitor 9 connected to the second switching element 2 in parallel. Note that the basic operation of the controller 50 is performed by the control unit 51.

### (3.1.1) Operation of making soft switching of first switching element when load current > 0

If the target of soft switching is a first switching element 1 (hereinafter referred to as a "target first switching element 1") and the polarity of the load current flowing through the AC terminal 41 connected to the target first switching element 1 is positive, then the controller 50 turns ON the first IGBT 6 corresponding to the target first switching element 1. In this manner, the controller 50 causes the resonant inductor L1 and resonant capacitor 9 connected to the target first switching element 1 to produce resonance, thereby charging the resonant capacitor 9 with electricity supplied from the regenerative capacitor 15 and reducing the voltage across the target first switching element 1 to zero. This allows the power converter 100 to make zero-voltage soft switching of the target first switching element 1.

The control signals SU1, SU2 to be respectively applied from the controller 50 to the first switching element 1U and the second switching element 2U of the switching circuit 10U in a situation where the target first switching element is the first switching element 1U of the switching circuit 10U are shown in FIG. 7. In addition, the control signal SU6 to be applied from the controller 50 to the first IGBT 6U of the switch 8U, the load current iU flowing through the U-phase of the AC load RA1, the current iL1 flowing through the resonant inductor L1, the voltage V1u across the first switching element 1U, and the voltage V2u across the second switching element 2U are also shown in FIG. 7. Furthermore, the control signals SV1, SV2 to be respectively applied from the controller 50 to the first switching element 1V and the second switching element 2V of the switching circuit 10V in a situation where the target first switching element is the first switching element 1V of the switching circuit 10V are also shown in FIG. 7. In addition, the control signal SV6 to be applied from the controller 50 to the first IGBT 6V of the switch 8V, the load current iV flowing through the V-phase of the AC load RA1, the current iL1 flowing through the resonant inductor L1, the voltage V1v across the first switching element 1V, and the voltage V2v across the second switching element 2V are also shown in FIG. 7.

Furthermore, the dead time period Td that the controller 50 sets to prevent the respective ON periods of the first switching element 1 and the second switching element 2 of the same phase from partially overlapping with each other is also shown in FIG. 7. Besides, an additional time Tau set by the controller 50 with respect to the control signal SU6 for the first IGBT 6U of the switch 8U and an additional time Tav set by the controller 50 with respect to the control signal SV6 for the first IGBT 6V of the switch 8V are also shown in FIG. 7. The additional time Tau and the additional time Tav will be described later.

The control signals SW1, SW2 to be respectively applied from the controller 50 to the first switching element 1W and the second switching element 2W of the switching circuit 10W in a situation where the target first switching element is the first switching element 1W of the switching circuit 10W are shown in FIG. 8. In addition, the control signal SW6 to be applied from the controller 50 to the first IGBT 6W of the switch 8W and the load current iW flowing through the W-phase of the AC load RA1 are also shown in FIG. 8. The current iL1 flowing through the resonant inductor L1 is also shown in FIG. 8. The voltage V1w across the first switching element 1W and the voltage V2w across the second switching element 2W are also shown in FIG. 8. In FIG. 8 the voltage value of the DC power supply E1 is designated by Vd.

Furthermore, the dead time period Td that the controller 50 sets to prevent the respective ON periods of the first switching element 1W and the second switching element 2W from partially overlapping with each other is also shown in FIG. 8. Besides, an additional time Taw set by the controller 50 with respect to the control signal SW6 for the first IGBT 6W of the switch 8W is also shown in FIG. 8. The additional time Taw will be described later.

The additional time Tau is an amount of time that the controller 50 provides to make the high-level period of the control signal SU6 longer than the dead time period Td by setting a time t1 when the high-level period of the control signal SU6 begins at a point in time earlier than a time t2 when the dead time period Td begins as shown in FIG. 7. The length of the additional time Tau is determined by the value of the load current iU. To start producing the LC resonance from the time t2 when the dead time period Td begins, it is preferable that the value of the current iL1 agree with the value of the load current iU at the time t2 when the dead time period Td begins. This is because as long as iL1 < iU is satisfied, all of the current iL1 flows through the AC load RA1, and therefore, the resonant capacitor 9U cannot be charged. The time when the high-level period of the control signal SU6 ends may be simultaneous with, or later than, a time t3 when the dead time period Td ends. In the example shown in FIG. 7, the time when the high-level period of the control signal SU6 ends is set to be simultaneous with the time t3 when the dead time period Td ends. The controller 50 sets the length of the high-level period of the control signal SU6 at Tau + Td. In the switching circuit 10U, the voltage V2u across the second switching element 2U becomes Vd at the time t3 when the dead time period Td ends, while the voltage V1u across the first switching element 1U goes zero at the time t3 when the dead time period Td ends. In the example shown in FIG. 7, the current iL1 starts flowing through the resonant inductor L1 at the time t1 when the high-level period of the control signal SU6 begins and goes zero at a time t4 when the additional time Tau has passed since the time t3 when the dead time period Td ends. As for the current iL1, the current iL1 satisfies iL1 ≥ iU from the time t2 when the dead time period Td begins, and therefore, the current iL1 in the hatched part of the current waveform shown as the fifth waveform from the top of FIG. 7 flows into the resonant capacitor 9U to produce LC resonance. From the time t3 when the dead time period Td ends and on, the current iL1 will be regenerated to the power converter circuit 11 via the third diode 13 directly connected to the resonant inductor L1.

To start producing the LC resonance at the time t2 when the dead time period Td begins and end a resonant half cycle at the time when the dead time period Td ends as described above, the controller 50 determines the additional time Tau based on the load current iU such that iL1 = iU is satisfied at the time t2 when the dead time period Td begins. More specifically, using either the detection result of the load current iU by a current sensor or a signal processing value thereof, or an estimated value of the load current iU, the inductance L of the resonant inductor L1 that has been stored in advance, and the detection result of the voltage V15 across the regenerative capacitor 15, for example, the controller 50 determines the additional time Tau by the equation: Tau = iU × (L/V15). In this case, as the detection result of the load current iU or the signal processing value thereof, either a detection value at a carrier cycle at which the additional time Tau is added or a detection value at a timing closest to the carrier cycle may be used. Also, in this case, as the estimated value of the load current iU, a value of the load current iU estimated at the carrier cycle at which the additional time Tau is added may be used, for example. The resonant half cycle is one half of a resonant cycle, which is the reciprocal of the resonant frequency of a resonant circuit including one resonant inductor L1 and one resonant capacitor 9. The controller 50 sets the resonant half cycle to make the resonant half cycle equal to or shorter than the dead time period Td, e.g., as long as the length of the dead time period Td.

The additional time Tav is an amount of time that the controller 50 provides to make the high-level period of the control signal SV6 longer than the dead time period Td by setting a time t5 when the high-level period of the control signal SV6 begins at a point in time earlier than a time t6 when the dead time period Td begins as shown in FIG. 7. The length of the additional time Tav is determined by the value of the load current iV. To start producing LC resonance from the time t6 when the dead time period Td begins, it is preferable that the value of the current iL1 agree with the value of the load current iV at the time t6 when the dead time period Td begins. This is because as long as iL1 < iV is satisfied, all of the current iL1 flows through the AC load RA1, and therefore, the resonant capacitor 9V cannot be charged. The time when the high-level period of the control signal SV6 ends may be simultaneous with, or later than, a time t7 when the dead time period Td ends. In the example shown in FIG. 7, the time when the high-level period of the control signal SV6 ends is set to be simultaneous with the time t7 when the dead time period Td ends. The controller 50 sets the length of the high-level period of the control signal SV6 at Tav + Td. The voltage V1v across the first switching element 1V goes zero at the time t7 when the dead time period Td ends. In the example shown in FIG. 7, the current iL1 starts flowing through the resonant inductor L1 at the time t5 when the high-level period of the control signal SV6 begins and goes zero at a time t8 when the additional time Tav has passed since the time t7 when the dead time period Td ends. As for the current iL1, the current iL1 satisfies iL1 ≥ iV from the time t6 when the dead time period Td begins and on, and therefore, the current iL1 in the hatched part of the current waveform shown as the tenth waveform from the top of FIG. 7 flows into the resonant capacitor 9V to produce the LC resonance. From the time t7 when the dead time period Td ends and on, the current iL1 will be regenerated to the power converter circuit 11 via the third diode 13 directly connected to the resonant inductor L1.

To start producing the LC resonance at the time t6 when the dead time period Td begins as described above, the controller 50 determines the additional time Tav based on the load current iV such that iL1 = iV is satisfied at the time t6 when the dead time period Td begins. More specifically, using either the detection result of the load current iV by a current sensor or a signal processing value thereof, or an estimated value of the load current iV, the inductance L of the resonant inductor L1 that has been stored in advance, and the detection result of the voltage V15 across the regenerative capacitor 15, for example, the controller 50 determines the additional time Tav by the equation: Tav = iV × (L/V15). In this case, as the detection result of the load current iV or the signal processing value thereof, either a detection value at a carrier cycle at which the additional time Tav is added or a detection value at a timing closest to the carrier cycle may be used. Also, in this case, as the estimated value of the load current iV, a value of the load current iV estimated at the carrier cycle at which the additional time Tav is added may be used, for example.

The additional time Taw is an amount of time that the controller 50 provides to make the high-level period of the control signal SW6 longer than the dead time period Td by setting a time t9 when the high-level period of the control signal SW6 begins at a point in time earlier than a time t10 when the dead time period Td begins as shown in FIG. 8. The length of the additional time Taw is determined by the value of the load current iW. To start producing LC resonance from the time t10 when the dead time period Td begins, it is preferable that the value of the current iL1 agree with the value of the load current iW at the time t10 when the dead time period Td begins. This is because as long as iL1 < iW is satisfied, all of the current iL1 flows through the AC load RA1, and therefore, the resonant capacitor 9W cannot be charged. The time when the high-level period of the control signal SW6 ends may be simultaneous with, or later than, a time t11 when the dead time period Td ends. In the example shown in FIG. 8, the time when the high-level period of the control signal SW6 ends is set to be simultaneous with the time t11 when the dead time period Td ends. The controller 50 sets the length of the high-level period of the control signal SW6 at Taw + Td. The voltage V1w across the first switching element 1W goes zero at the time t11 when the dead time period Td ends. In the example shown in FIG. 8, the current iL1 starts flowing through the resonant inductor L1 at the time t9 when the high-level period of the control signal SW6 begins and goes zero at a time t12 when the additional time Taw has passed since the time t11 when the dead time period Td ends. As for the current iL1, the current iL1 satisfies iL1 ≥ iW from the time t10 when the dead time period Td begins and on, and therefore, the current iL1 in the hatched part of the current waveform shown as the fourth waveform from the top of FIG. 8 flows into the resonant capacitor 9W to produce the LC resonance. From the time t11 when the dead time period Td ends and on, the current iL1 will be regenerated to the power converter circuit 11 via the third diode 13 directly connected to the resonant inductor L1.

The controller 50 determines the additional time Taw based on the load current iW. More specifically, using the detection result of the load current iW by a current sensor, the inductance L of the resonant inductor L1 that has been stored in advance, and the detection result of the voltage V15 across the regenerative capacitor 15, for example, the controller 50 determines the additional time Taw by the equation: Taw = iW × (L/V15). In this case, as the detection result of the load current iW or the signal processing value thereof, either a detection value at a carrier cycle at which the additional time Taw is added or a detection value at a timing closest to the carrier cycle may be used. Also, in this case, as the estimated value of the load current iW, a value of the load current iW estimated at the carrier cycle at which the additional time Taw is added may be used, for example.

### (3.1.2) Operation of making soft switching of second switching element when load current > 0

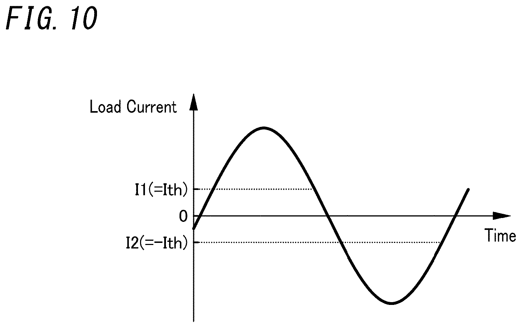

If the target of the soft switching is a second switching element 2 (hereinafter referred to as a "target second switching element 2") and the polarity of the load current (which is the load current iU, the load current iV, or the load current iW) flowing through the AC terminal 41 connected to the target second switching element 2 is positive, then the controller 50 compares the current value of the load current with a first current threshold value I1 (= Ith, refer to FIG. 10). If the current value of the load current is greater than the first current threshold value I1, the controller 50 does not turn the switch 8 ON. On the other hand, if the current value of the load current is less than the first current threshold value I1, the controller 50 turns the switch 8 ON in the dead time period Td. In the power converter 100, if the current value of the load current is greater than the first current threshold value I1, the controller 50 may perform, using the load current, a discharging operation on the resonant capacitor 9 connected to the target second switching element 2 in parallel without turning ON the switch 8 corresponding to the target second switching element 2. This allows the power converter 100 to make zero-voltage soft switching of the target second switching element 2.

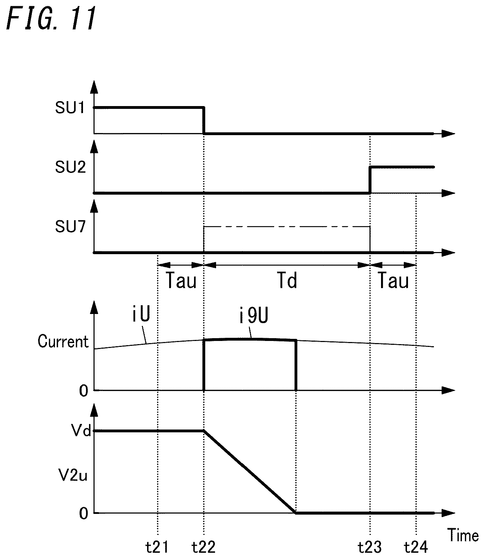

In FIG. 11, the control signals SU1, SU2, SU7, the load current iU, a current i9U flowing from the resonant capacitor 9U, and the voltage V2u across the second switching element 2U are shown as for a situation where the target second switching element 2 is the second switching element 2U of the switching circuit 10U and the current value of the load current iU is greater than the first current threshold value I1. In addition, the dead time period Td and the additional time Tau set by the controller 50 with respect to a control signal SU7 for the second IGBT 7U of the switch 8U are also shown in FIG. 11.

If the current value of the load current iU is greater than the first current threshold value I1, the controller 50 does not provide any high-level period for the control signal SU7. In that case, in the power converter 100, a current i9U starts flowing from the resonant capacitor 9U at a time t22 when the dead time period Td begins, the current i9U decreases to zero before a time t23 when the dead time period Td ends, and the voltage V2u across the second switching element 2U goes zero before the time t23 when the dead time period Td ends. Thus, in the power converter 100, when the control signal SU2 changes from low level to high level at the time t23 when the dead time period Td ends, the second switching element 2U is subjected to zero-voltage soft switching.

If the current value of the load current iU is less than the first current threshold value I1, then the controller 50 provides a high-level period for the control signal SU7 as indicated by the two-dot chain in FIG. 11, for example. In that case, the time when the high-level period of the control signal SU7 begins may be simultaneous with, for example, the time t22 when the dead time period Td begins. Also, the time when the high-level period of the control signal SU7 ends is simultaneous with the time t23 when the dead time period Td ends. Thus, in the power converter 100, the voltage V2u across the second switching element 2U goes zero before the time t23 when the dead time period Td ends. Consequently, in the power converter 100, when the control signal SU2 changes from low level to high level at the time t23 when the dead time period Td ends, the second switching element 2U is subjected to zero-voltage soft switching. Alternatively, the time when the high-level period of the control signal SU7 begins may be a time t21 which is earlier by the additional time Tau than the time t22 when the dead time period Td begins. The time when the high-level period of the control signal SU7 ends may be a time t24 which is later by the additional time Tau than the time t23 when the dead time period Td ends. Note that the time before or after the high-level period of the control signal SU7 overlaps with the dead time period Td does not have to be the additional time Tau but may also be any other preset time.

### (3.1.3) Operation of making soft switching of second switching element when load current < 0

If the polarity of the load current (which is the load current iU, the load current iV, or the load current iW) flowing through the AC terminal 41 connected to the target second switching element 2 is negative, then the controller 50 turns ON the second IGBT 7 corresponding to the target second switching element 2. In this manner, the controller 50 causes the resonant capacitor 9 and the resonant inductor L1 connected to the target second switching element 2 to produce resonance, thereby discharging electricity from the resonant capacitor 9 and reducing the voltage across the target second switching element 2 to zero. This allows the power converter 100 to make zero-voltage soft switching of the target second switching element 2.

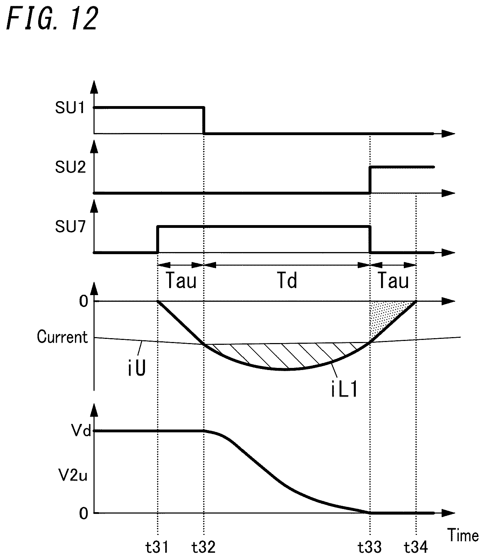

In FIG. 12, the control signals SU1, SU2, SU7, the load current iU, a current iL1 flowing through the resonant inductor L1, and the voltage V2u across the second switching element 2U are shown as for a situation where the target second switching element 2 is the second switching element 2U of the switching circuit 10U.

Furthermore, the dead time period Td that the controller 50 sets to prevent the first switching element 1 and the second switching element 2 of the same phase from turning ON simultaneously is also shown in FIG. 12. Besides, an additional time Tau set by the controller 50 with respect to the control signal SU7 for the second IGBT 7U of the switch 8U is also shown in FIG. 12. The time when the high-level period of the control signal SU7 ends may be simultaneous with, or later than, a time t33 when the dead time period Td ends. In the example shown in FIG. 12, the time when the high-level period of the control signal SU7 ends is set to be simultaneous with the time t33 when the dead time period Td ends. The controller 50 sets the length of the high-level period of the control signal SU7 at Tau + Td. In the switching circuit 10U, the voltage V2u across the second switching element 2U goes zero at the time t33 when the dead time period Td ends. In the example shown in FIG. 12, the current iL1 starts flowing through the resonant inductor L1 at a time t31 when the high-level period of the control signal SU7 begins and goes zero at a time t34 when the additional time Tau has passed since the time t33 when the dead time period Td ends. As for the current iL1, the current iL1 satisfies iL1 ≤ iU from a time t32 when the dead time period Td begins, and therefore, LC resonance is produced to cause a resonant current (i.e., a discharging current from the resonant capacitor 9U) to flow from the resonant capacitor 9U toward the resonant inductor L1. From the time t33 when the dead time period Td ends and on, the current iL1 will be regenerated to the power converter circuit 11 via the fourth diode 14 directly connected to the resonant inductor L1.

To start producing the LC resonance at the time t32 when the dead time period Td begins and end a resonant half cycle at the time t33 when the dead time period Td ends, the controller 50 determines the additional time Tau based on the load current iU such that iL1 = iU is satisfied at the time t32 when the dead time period Td begins. More specifically, using either the detection result of the load current iU by a current sensor or a signal processing value thereof, or an estimated value of the load current iU, the inductance L of the resonant inductor L1 that has been stored in advance, and the detection result of the voltage V15 across the regenerative capacitor 15, for example, the controller 50 determines the additional time Tau by the equation: Tau = |iU| × (L/V15). In this case, as the detection result of the load current iU or the signal processing value thereof, either a detection value at a carrier cycle at which the additional time Tau is added or a detection value at a timing closest to the carrier cycle may be used. Also, in this case, as the estimated value of the load current iU, a value of the load current iU estimated at the carrier cycle at which the additional time Tau is added may be used, for example.

### (3.1.4) Operation of making soft switching of first switching element when load current < 0

If the polarity of the load current (which is the load current iU, the load current iV, or the load current iW) flowing through the AC terminal 41 connected to the target first switching element 1 is negative, then the controller 50 compares the current value of the load current with a second current threshold value I2 (= -Ith, refer to FIG. 10). If the current value of the load current is less than the second current threshold value I2, the controller 50 does not turn the switch 8 ON. On the other hand, if the current value of the load current is greater than the second current threshold value I2, the controller 50 turns the switch 8 ON in the dead time period Td. In the power converter 100, if the current value of the load current is less than the second current threshold value I2, the controller 50 may charge, using the load current, the resonant capacitor 9 connected to the target first switching element 1 in series without turning ON the switch 8 corresponding to the target first switching element 1. This allows the power converter 100 to make zero-voltage soft switching of the target first switching element 1.

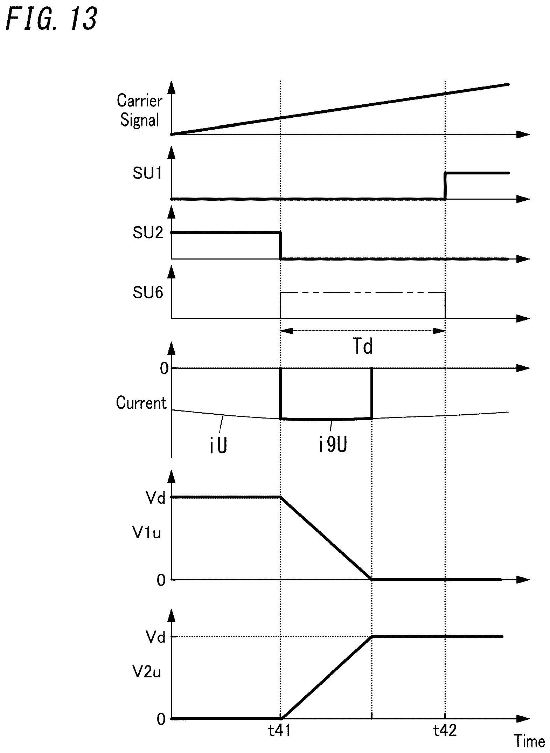

In FIG. 13, the control signals SU1, SU2, SU6, the load current iU, a current i9U flowing from the resonant capacitor 9U, the voltage V1u across the first switching element 1U, and the voltage V2u across the second switching element 2U are shown as for a situation where the target first switching element 1 is the first switching element 1U of the switching circuit 10U and the current value of the load current iU is greater than the second current threshold value I2 (in other words, a situation where the absolute value of the current value of the load current iU is less than the absolute value of the second current threshold value I2). In addition, the carrier signal and the dead time period Td are also shown in FIG. 13.

If the current value of the load current iU is less than the second current threshold value I2 (in other words, if the absolute value of the load current iU is greater than the absolute value of the second current threshold value I2), the controller 50 does not provide any high-level period for the control signal SU6. In that case, in the power converter 100, a current i9U starts flowing through the resonant capacitor 9U at a time t41 when the dead time period Td begins. As a result, in the power converter 100, the resonant capacitor 9U is charged with electricity to cause an increase in the voltage V2u across the second switching element 2U. The current i9U goes zero before a time t42 when the dead time period Td ends, and the voltage V1u across the first switching element 1U goes zero before the time t42 when the dead time period Td ends. Thus, in the power converter 100, when the control signal SU1 changes from low level to high level at the time t42 when the dead time period Td ends, the first switching element 1 is subjected to zero-voltage soft switching.

If the current value of the load current iU is greater than the second current threshold value I2 (in other words, if the absolute value of the load current iU is less than the absolute value of the second current threshold value I2), then the controller 50 provides a high-level period for the control signal SU6 as indicated by the two-dot chain in FIG. 13, for example. In that case, the time when the high-level period of the control signal SU6 begins may be simultaneous with, for example, the time t41 when the dead time period Td begins. Also, the time when the high-level period of the control signal SU6 ends is simultaneous with the time t42 when the dead time period Td ends. Thus, in the power converter 100, the voltage V1u across the first switching element 1U goes zero before the time t42 when the dead time period Td ends. Consequently, in the power converter 100, when the control signal SU1 changes from low level to high level at the time t42 when the dead time period Td ends, the first switching element 1U is subjected to zero-voltage soft switching.

### (3.2) Operations of first determiner and second determiner

In the controller 50, the first determiner 54 is operating even while the control unit 51 is performing the basic operation described above.

In FIGS. 2A and 2B, the load current iU, the load current iV, the load current iW, and the voltage V15 across the regenerative capacitor 15 are shown to illustrate how the first determiner 54 operates when the U-phase switch 8U has caused a failure, for example. Note that in FIGS. 2A and 2B, the scale on the axis of ordinates is adjusted, as for the voltage V15 across the regenerative capacitor 15, to make the maximum value Vmax and minimum value Vmin of a ripple voltage included in the voltage V15 across the regenerative capacitor 15 easily recognizable. The ripple voltage included in the voltage V15 across the regenerative capacitor 15 shown in FIG. 2A is a ripple voltage in a situation where each of the three switches 8U, 8V, 8W is operating properly. In FIG. 2A, the voltage V15 across the regenerative capacitor 15 is approximately equal to Vd/2. On the other hand, a ripple voltage included in the voltage V15 across the regenerative capacitor 15 shown in FIG. 2B is a ripple voltage in a situation where the switch 8U belonging to the three switches 8U, 8V, 8W has caused a failure to be opened (i.e., goes OFF accidentally). If the switch 8U has caused a failure, the resonant capacitor 9U connected to the switch 8U is no longer charged or discharged and the first switching element 1U and second switching element 2U connected to the switch 8U are switched by hard switching. In the power converter 100, if the switch 8U has caused a failure, the U-phase resonant current decreases and one cycle of the ripple voltage included in the voltage V15 across the regenerative capacitor 15 becomes longer than one cycle of the ripple voltage included in the voltage V15 across the regenerative capacitor 15 in a situation where the switch 8U is causing no failures.

In the following description, it will be described with reference to FIG. 2B how the first determiner 54 operates in a situation where the U-phase switch 8U has caused a failure. It should be appreciated that the first determiner 54 operates in the same way even in a situation where the V-phase switch 8V has caused a failure and in a situation where the W-phase switch 8W has caused a failure.

The first determiner 54 determines a switching state in the power converter circuit 11 based on the ripple voltage included in the voltage V15 across the regenerative capacitor 15 and the plurality of load currents iU, iV, iW supplied from the plurality of AC terminals 41 as described above. The switching state in the power converter circuit 11 includes the respective switching states of the plurality of first switching elements 1 and the plurality of second switching elements 2.

The first determiner 54 determines that hard switching have occurred in the power converter circuit 11 if a predetermined condition (hereinafter referred to as a "first predetermined condition") is satisfied. As used herein, the expression "hard switching has occurred in the power converter circuit 11" means that hard switching has occurred in at least one of the plurality of first switching elements 1 and the plurality of second switching elements 2. The first predetermined condition is a condition that the number of intersections B1 between any two load currents, belonging to the plurality of load currents iU, iV, iW, during a prescribed period Ts be larger than a preset value (e.g., two). The prescribed period Ts is a period between a first timing of generation tg1 of a first peak P1 of the ripple voltage and a second timing of generation tg2 of a second peak P2 of the ripple voltage. In the first embodiment, the first peak P1 is one maximum value peak at which the ripple voltage reaches a maximum value Vmax and the second peak P2 is another maximum value peak at which the ripple voltage reaches the maximum value Vmax again after the first peak P1 (e.g., the second peak P2 is next to the first peak P1 in the first embodiment) as shown in FIGS. 2A and 2B. That is to say, the first peak P1 is one maximum value peak belonging to a plurality of maximum value peaks, at which the ripple voltage reaches the maximum value Vmax, and the second peak P2 is a maximum value peak next to the one maximum value peak belonging to the plurality of maximum value peaks. In this case, the prescribed period Ts is as long as one cycle of the ripple voltage. At each intersection B1, the two load currents have the same polarity and the same magnitude.

In FIG. 2A, the number of intersections B1 during the prescribed period Ts is two. On the other hand, in FIG. 2B, the number of intersections B1 during the prescribed period Ts is seven, which is larger than two.

The first determiner 54 may, for example, reset the value of the variable into zero, increase the value of the variable by one every time an intersection B1 is detected, and decrease the value of the variable by two every time a maximum value peak is detected. If the intersection B1 and the maximum value peak are detected at the same timing, then the value of the variable is +1 - 2 = -1. If the value of the variable goes negative, the first determiner 54 resets the value of the variable into zero. Thus, if each of the three switches 8U, 8V, 8W is operating properly, the first determiner 54 sets the value of the variable at a value equal to or less than two. On the other hand, if the switch 8U has caused a failure, for example, then the first determiner 54 sets the value of the variable at four, which is larger than two.

The second peak P2 for use for the first determiner 54 to set the first predetermined condition only needs to be one maximum value peak at which the ripple voltage reaches the maximum value Vmax after the first peak P1. Thus, the second peak P2 may be one maximum value peak at which the ripple voltage reaches the maximum value Vmax and which is second next to the first peak P1, for example. In that case, the prescribed period Ts is twice as long as one cycle of the ripple voltage, and the preset value for use in the first determiner 54 may be a value twice as large as the value in a situation where the prescribed period Ts is as long as one cycle of the ripple voltage. That is to say, the preset value may be four (= two times two). Alternatively, the second peak P2 for use for the first determiner 54 to set the first predetermined condition may be one maximum value peak at which the ripple voltage reaches the maximum value Vmax and which is third next to the first peak P1, for example. In that case, the prescribed period Ts is three times as long as one cycle of the ripple voltage, and the preset value for use in the first determiner 54 may be a value three times as large as the value in a situation where the prescribed period Ts is as long as one cycle of the ripple voltage. That is to say, the preset value may be six (= two times three). In short, the preset value for use in the first determiner 54 may be determined appropriately according to the length of the prescribed period Ts. Speaking more generally, if the prescribed period Ts is as long as n cycles of the ripple voltage (where n is a natural number), then the preset value may be n × 2.

To determine whether the first predetermined condition is satisfied, the first determiner 54 uses a moving average as a signal processing value representing the detection result of each load current iU, iV, iW and the voltage V15 across the regenerative capacitor 15. Each period in which the moving average is obtained may be set at any value unless the period is exactly as long as one cycle at which each load current iU, iV, iW and the voltage V15 across the regenerative capacitor 15 vary. This reduces the chances of the decision made by the first determiner 54 being affected by the noise included in the detection value of each of the load currents iU, iV, iW and the voltage V15 across the regenerative capacitor 15, thus contributing to improving the accuracy of the decision. That is to say, the first determiner 54 may improve the accuracy of detection of the first peak P1, the second peak P2, and the respective intersections B1 and may more accurately determine whether hard switching has occurred in the power converter circuit 11.

The first determiner 54 may determine, if a predetermined condition (hereinafter referred to as a "second predetermined condition") different from the first predetermined condition is satisfied, that each of the plurality of first switching elements 1 and the plurality of second switching elements 2 have been soft-switched. As used herein, if each of the plurality of first switching elements 1 and the plurality of second switching elements 2 has been soft-switched, then this means that no hard switching has occurred in the power converter circuit 11, stated otherwise. The second predetermined condition is a condition that the number of intersections B1 between any two load currents, belonging to the plurality of load currents iU, iV, iW, during the prescribed period Ts be equal to or smaller than a preset value. The prescribed period Ts is a period between the first timing of generation tg1 of the first peak P1 of the ripple voltage and the second timing of generation tg2 of the second peak P2 of the ripple voltage.

In the power converter 100, if the first determiner 54 has determined that hard switching have occurred in the power converter circuit 11, then the controller 50 deactivates the power converter circuit 11 after the second determiner 55 has made a decision, for example. To deactivate the power converter circuit 11, the control unit 51 may, for example, either cause each of the control signals SU1, SV1, SW1, SU2, SV2, SW2 to fall to the low level or stop outputting the control signals SU1, SV1, SW1, SU2, SV2, SW2.

If the first determiner 54 has determined that hard switching have occurred in the power converter circuit 11, the second determiner 55 determines, based on the polarities of the plurality of load currents iU, iV, iW in a particular phase of the ripple voltage, in which of the plurality of switching circuits 10 hard switching has occurred.

In the power converter 100, the relationship in polarity between the plurality of load currents iU, iV, iW in the particular phase of the ripple voltage changes as shown in FIGS. 3A, 3B, and 3C depending on which of the three switches 8 has caused a failure. Each of FIGS. 3A, 3B, and 3C may be interpreted in the same way as in FIG. 2B.

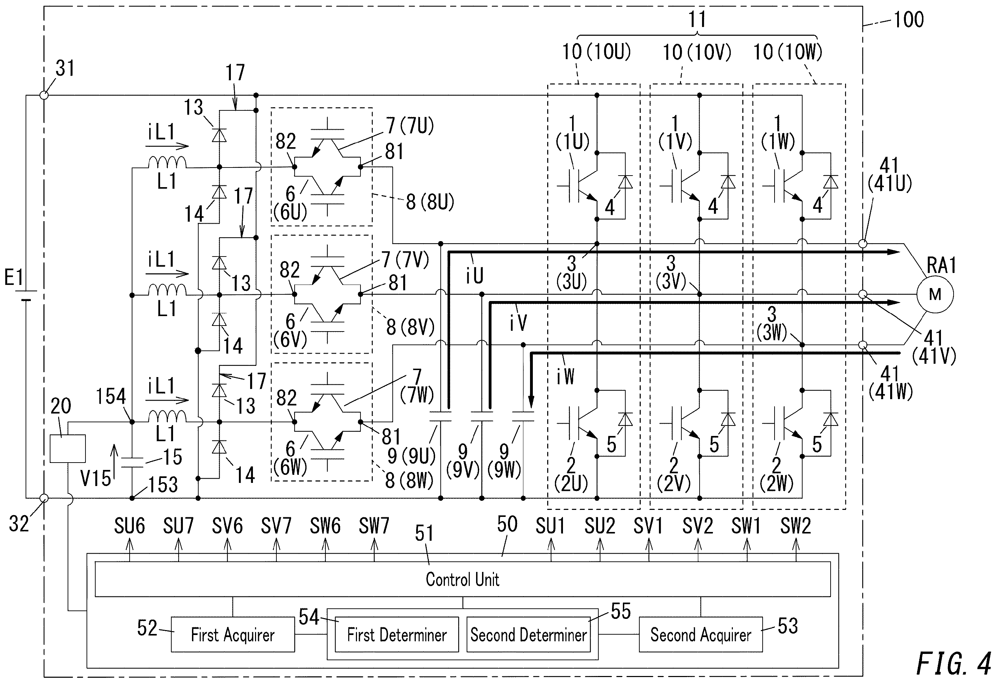

Specifically, if only the U-phase switch 8U has caused a failure out of the three switches 8U, 8V, 8W, then the polarity of the load current iU is positive, the polarity of the load current iV is positive, and the polarity of the load current iW is negative in a particular phase as shown in FIG. 3A. That is to say, if only the U-phase switch 8U has caused a failure, then only the load current iW comes to have negative polarity out of the three load currents iU, iV, iW. If the switch 8U has caused a failure, then the resonant capacitor 9U connected to the switch 8U is no longer charged or discharged, and therefore, the first switching element 1U and the second switching element 2U connected to the switch 8U are hard-switched. In that case, in the dead time period just before the first switching element 1W turns OFF, the load current iU flows to discharge electricity from the resonant capacitor 9U, the load current iV flows to discharge electricity from the resonant capacitor 9V, and the load current iW flows to charge the resonant capacitor 9W with electricity in a particular phase as shown in FIG. 4.

If only the V-phase switch 8V has caused a failure out of the three switches 8U, 8V, 8W, then the polarity of the load current iU is negative, the polarity of the load current iV is positive, and the polarity of the load current iW is positive in a particular phase as shown in FIG. 3B. That is to say, if only the V-phase switch 8V has caused a failure, then only the load current iU comes to have negative polarity out of the three load currents iU, iV, iW. If the switch 8V has caused a failure, then the resonant capacitor 9V connected to the switch 8V is no longer charged or discharged, and therefore, the first switching element 1V and the second switching element 2V connected to the switch 8V are hard-switched.

If only the W-phase switch 8W has caused a failure out of the three switches 8U, 8V, 8W, then the polarity of the load current iU is positive, the polarity of the load current iV is negative, and the polarity of the load current iW is positive in a particular phase as shown in FIG. 3C. That is to say, if only the W-phase switch 8W has caused a failure, then only the load current iV comes to have negative polarity out of the three load currents iU, iV, iW. If the switch 8W has caused a failure, then the resonant capacitor 9W connected to the switch 8W is no longer charged or discharged, and therefore, the first switching element 1W and the second switching element 2W connected to the switch 8W are hard-switched.

The particular phase may be, for example, the first timing of generation tg1 of the first peak P1 of the ripple voltage. The first peak P1 may be one maximum value peak at which the ripple voltage reaches the maximum value Vmax. That is to say, the particular phase is the phase of one maximum value peak belonging to a plurality of maximum value peaks of the ripple voltage included in the voltage V15 across the regenerative capacitor 15. If the polarity of only one load current belonging to the plurality of load currents iU, iV, iW is negative, then the second determiner 55 determines that hard switching have occurred in a switching circuit 10 corresponding to a load current having a phase lag of 120 degrees with respect to the one load current which belongs to the plurality of switching circuits 10.

More specifically, if only the load current iW out of the three load currents iU, iV, iW has negative polarity, then the second determiner 55 determines that hard switching have occurred in the first switching element 1U and second switching element 2U of the switching circuit 10U corresponding to the load current iU having a phase lag of 120 degrees with respect to the load current iW.

On the other hand, if only the load current iU out of the three load currents iU, iV, iW has negative polarity, then the second determiner 55 determines that hard switching have occurred in the first switching element 1V and second switching element 2V of the switching circuit 10V corresponding to the load current iV having a phase lag of 120 degrees with respect to the load current iU.

Furthermore, if only the load current iV out of the three load currents iU, iV, iW has negative polarity, then the second determiner 55 determines that hard switching have occurred in the first switching element 1W and second switching element 2W of the switching circuit 10W corresponding to the load current iW having a phase lag of 120 degrees with respect to the load current iV.

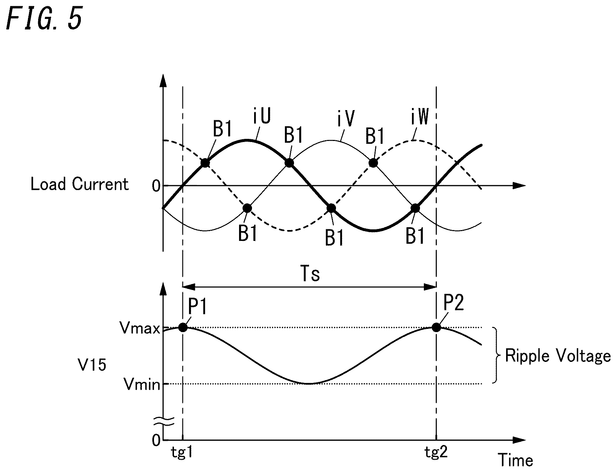

In the power converter 100, if two switches 8V, 8W out of the three switches 8U, 8V, 8W have caused a failure, then charging and discharging of the regenerative capacitor 15 is determined only by the U-phase load current iU. Thus, if two switches 8V, 8W out of the three switches 8U, 8V, 8W have caused a failure to make the load current iU zero and make the polarities of load currents iV, iW negative and positive, respectively, at the first timing of generation tg1 of the ripple voltage included in the voltage V15 across the regenerative capacitor 15 as shown in FIG. 5, then the second determiner 55 may determine that hard switching have occurred in the switching circuit 10V.

Furthermore, if only two load currents out of the plurality of load currents iU, iV, iW have negative polarity, then the second determiner 55 determines, based on one of the two load currents which has the greater absolute value, that hard switching have occurred in the switching circuit 10 corresponding to the load current having a phase lag of 120 degrees with respect to the one load current which belongs to the plurality of switching circuits 10.

For example, if two switches 8V, 8W out of the three switches 8U, 8V, 8W have caused a failure to cause the first determiner 54 to determine that hard switching have occurred in the power converter circuit 11, then the load current iU may come to have negative polarity without going zero at the first timing of generation tg1 in the example shown in FIG. 5. If only two load currents iU, iV out of the plurality of load currents iU, iV, iW have negative polarity, then the second determiner 55 determines, based on one load current iV having the greater absolute value out of the two load currents iU, iV, that hard switching have occurred in the first switching element 1W and second switching element 2W of the switching circuit 10W corresponding to the load current iW having a phase lag of 120 degrees with respect to the one load current iV which belongs to the plurality of switching circuits 10.

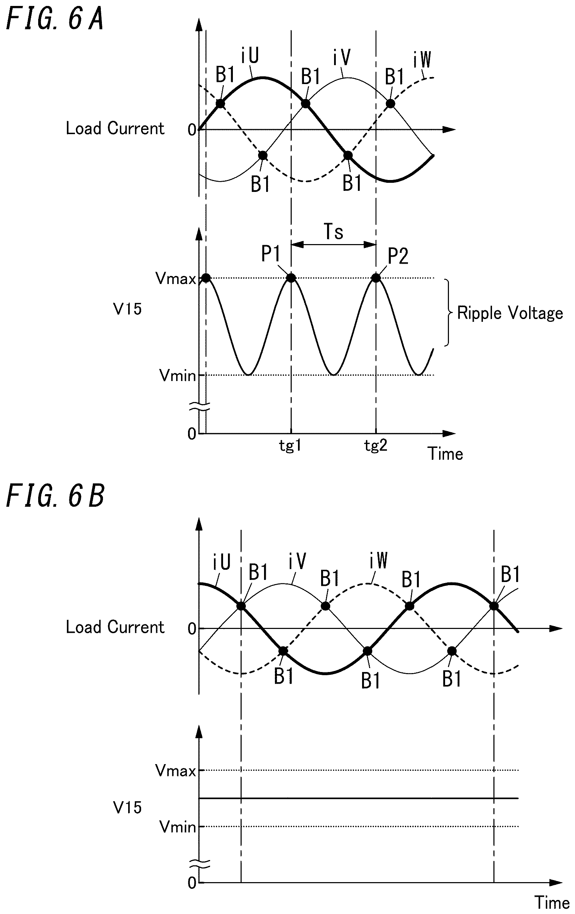

Furthermore, in the power converter 100, if the voltage V15 across the regenerative capacitor 15 is constant (refer to FIG. 6B), the first determiner 54 determines that hard switching have occurred in each of the plurality of switching circuits 10. As used herein, the expression "the voltage V15 across the regenerative capacitor 15 is constant" means that the voltage V15 across the regenerative capacitor 15 in one cycle of the load current is equal to or greater than 95% and equal to or less than 105%, for example, of the average value of the maximum value Vmax and minimum value Vmin of the ripple voltage in a situation where none of the three switches 8U, 8V, 8W have caused a failure. Note that the ripple voltage included in the voltage V15 across the regenerative capacitor 15 shown in FIG. 6A refers to a ripple voltage in a situation where each of the three switches 8U, 8V, 8W is operating properly.

### (4) Recapitulation

In the power converter 100 according to the first embodiment, the controller 50 includes a first determiner 54 and a second determiner 55. The first determiner 54 determines a switching state in the power converter circuit 11 based on a ripple voltage included in a voltage V15 across the regenerative capacitor 15 and a plurality of load currents iU, iV, iW supplied from the plurality of AC terminals 41. When the first determiner 54 has determined that hard switching have occurred in the power converter circuit 11, the second determiner 55 determines, based on the polarities of the plurality of load currents iU, iV, iW in a particular phase of the ripple voltage, in which of the plurality of switching circuits 10 hard switching has occurred.

The power converter 100 according to the first embodiment may detect a switching circuit 10 in which hard switching has occurred in the power converter circuit 11.

In addition, the power converter 100 according to the first embodiment may not only reduce the cost by cutting down the number of components required but also reduce the number of input ports required for (the processor of) a computer system serving as the controller 50 compared to a situation where six voltage sensors are provided to detect the respective voltages across the three first switching elements 1 and three second switching elements 2 of the power converter circuit 11.

Furthermore, in the power converter 100 according to the first embodiment, the first determiner 54 determines, if the predetermined condition (first predetermined condition) is satisfied, that hard switching have occurred in the power converter circuit 11. The predetermined condition (first predetermined condition) is a condition that the number of intersections B1 between any two load currents, belonging to the plurality of load currents iU, iV, iW, during a prescribed period Ts be larger than a preset value. The prescribed period Ts is a period between a first timing of generation tg1 of a first peak P1 of the ripple voltage and a second timing of generation tg2 of a second peak P2 of the ripple voltage. Thus, the power converter 100 according to the first embodiment may detect, if hard switching has occurred in at least one of the plurality of first switching elements 1 and the plurality of second switching elements 2, that hard switching has occurred in the power converter circuit 11.

### (Second embodiment)

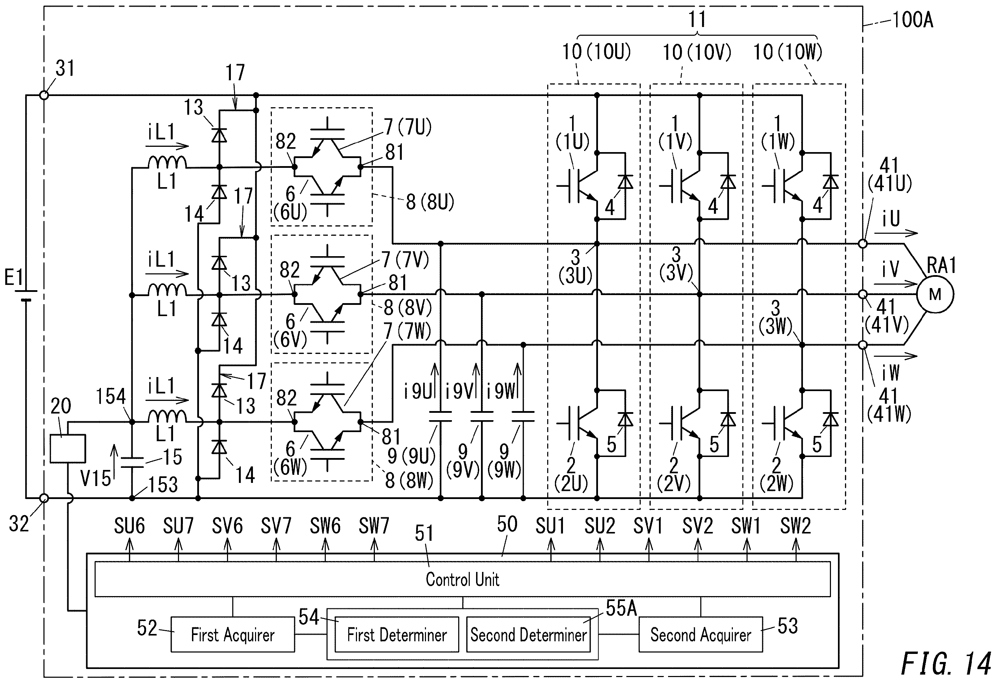

Next, a power converter 100A according to a second embodiment will be described with reference to FIGS. 14-16.

### (1) Overall configuration for power converter

As shown in FIG. 14, the power converter 100A according to the second embodiment has substantially the same overall configuration as the power converter 100 (refer to FIG. 1) according to the first embodiment, but includes a second determiner 55A instead of the second determiner 55 of the controller 50 in the power converter 100, which is a difference from the power converter 100 according to the first embodiment. In the following description, any constituent element of the power converter 100A according to the second embodiment, having the same function as a counterpart of the power converter 100 according to the first embodiment described above, will be designated by the same reference numeral as that counterpart's, and description thereof will be omitted herein.

If the first determiner 54 has determined that hard switching have occurred in the power converter circuit 11, the second determiner 55A determines, based on the control signals SU6, SU7, SV6, SV7, SW6, SW7 to be respectively applied to the plurality of switches 8, in which of the plurality of switching circuits 10 hard switching has occurred.

### (2) Operation of power converter

The power converter 100A according to the second embodiment operates in substantially the same way as the power converter 100 according to the first embodiment except that the second determiner 55A operates differently from the second determiner 55. Thus, description of the operation of the power converter 100A will be omitted herein when the power converter 100A operates in the same way as the power converter 100.

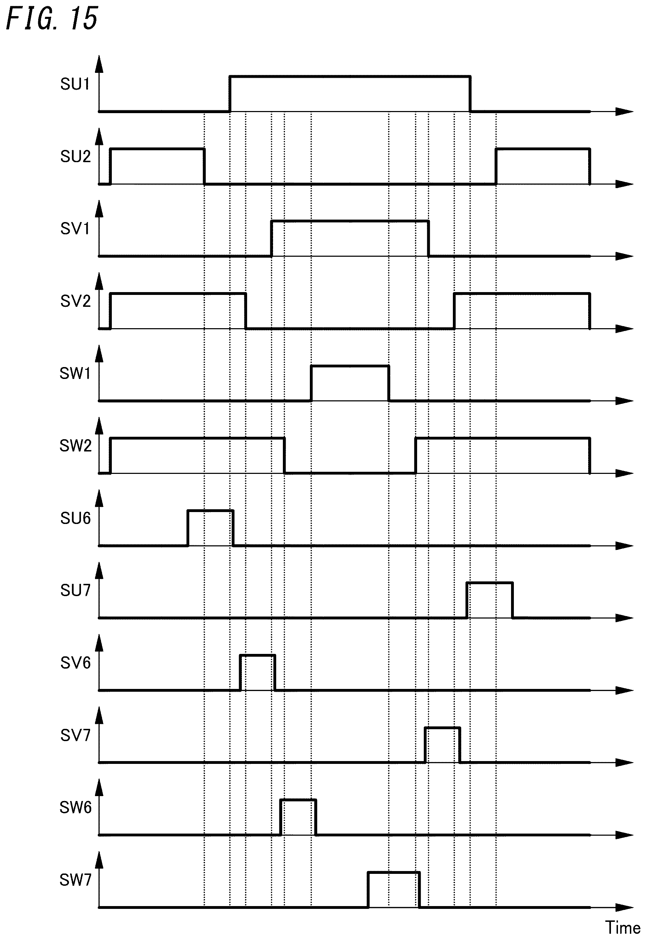

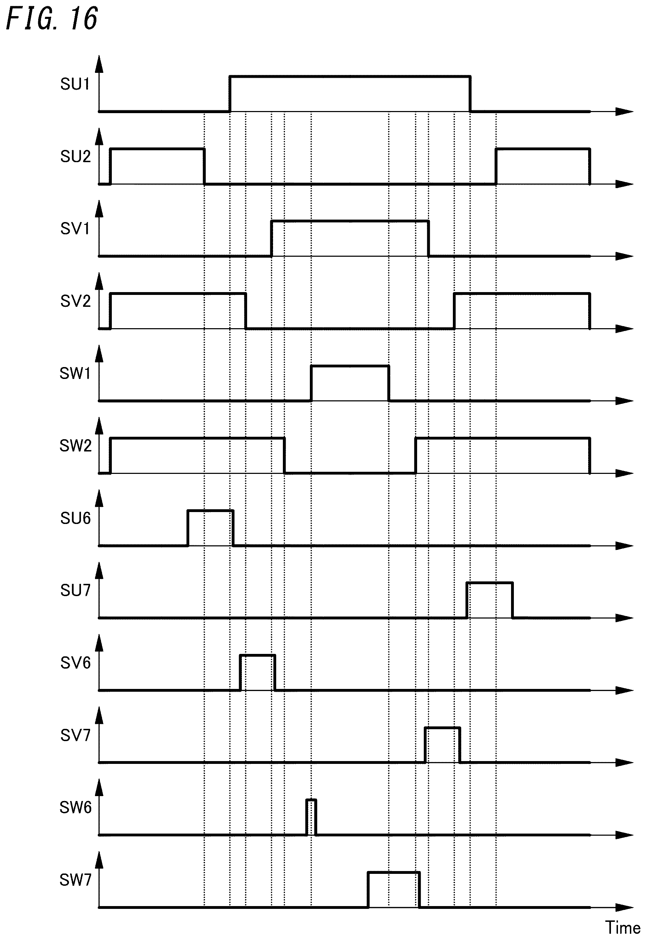

FIG. 15 illustrates the respective control signals SU1, SU2, SV1, SV2, SW1, SW2, SU6, SU7, SV6, SV7, SW6, SW7 in a situation where none of the three switches 8U, 8V, 8W have caused a failure. FIG. 16 illustrates the respective control signals SU1, SU2, SV1, SV2, SW1, SW2, SU6, SU7, SV6, SV7, SW6, SW7 in a situation where only the U-phase switch 8U has caused a failure. Note that although FIGS. 15 and 16 have not been referred to in the description of the first embodiment, the following description with reference to FIGS. 15 and 16 is applicable to the first embodiment as well.

If only the U-phase switch 8U has caused a failure, the polarity of the load current iW goes negative just before the W-phase first switching element 1W turns ON, thus causing the resonant capacitor 9W to be charged with electricity as shown in FIG. 4. Therefore, the high-level period of the control signal SW6 (refer to FIG. 16) in a situation where only the U-phase switch 8U has caused a failure is shorter than the high-level period of the control signal SW6 (refer to FIG. 15) in a situation where the U-phase switch 8U has caused no failures. If only the U-phase switch 8U has caused a failure, then the high-level period of the control signal SW6 (refer to FIG. 16) goes zero in some cases.

If only the V-phase switch 8V has caused a failure, then the high-level period of the control signal SU6 is shorter than in a situation where the switch 8V has caused no failures.

If only the W-phase switch 8W has caused a failure, then the high-level period of the control signal SV6 is shorter than in a situation where the switch 8W has caused no failures.

If the first determiner 54 has determined that hard switching have occurred in the power converter circuit 11, the second determiner 55A determines, based on the respective control signals applied to the plurality of switches 8, in which of the plurality of switching circuits 10 hard switching has occurred.

If the high-level period of the control signal SW6 has become shorter than the high-level period in a normal state, the second determiner 55A determines in which of the plurality of switching circuits 10U, 10V, 10W hard switching has occurred.

If the high-level period of the control signal SU6 has become shorter than the high-level period in a normal state, the second determiner 55A determines in which of the plurality of switching circuits 10U, 10V, 10W hard switching has occurred.

If the high-level period of the control signal SV6 has become shorter than the high-level period in a normal state, the second determiner 55A determines in which of the plurality of switching circuits 10U, 10V, 10W hard switching has occurred.

### (3) Recapitulation

In the power converter 100A according to the second embodiment, the controller 50 includes a first determiner 54 and a second determiner 55A. The first determiner 54 determines a switching state in the power converter circuit 11 based on a ripple voltage included in a voltage V15 across the regenerative capacitor 15 and a plurality of load currents iU, iV, iW supplied from the plurality of AC terminals 41. When the first determiner 54 has determined that hard switching have occurred in the power converter circuit 11, the second determiner 55A determines, based on control signals to be respectively applied to the plurality of switches 8, in which of the plurality of switching circuits 10 hard switching has occurred.

The power converter 100A according to the second embodiment may detect a switching circuit 10 in which hard switching has occurred in the power converter circuit 11.

### (Third embodiment)

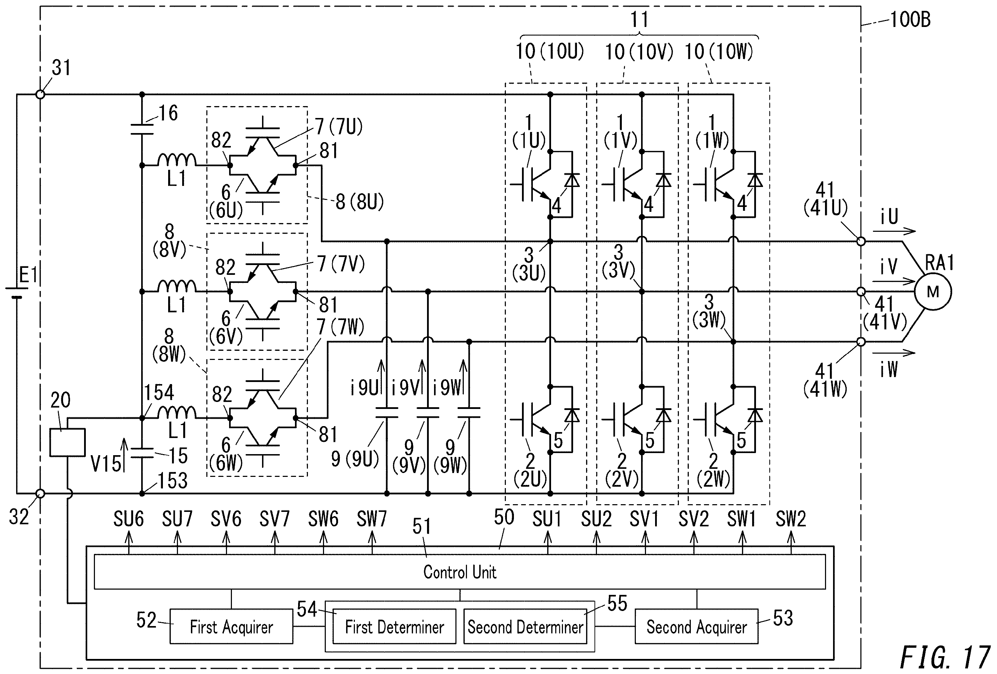

A power converter 100B according to a third embodiment will be described with reference to FIG. 17. In the following description, any constituent element of the power converter 100B according to the third embodiment, having the same function as a counterpart of the power converter 100 (refer to FIG. 1) according to the first embodiment described above, will be designated by the same reference numeral as that counterpart's, and description thereof will be omitted herein.

The power converter 100B according to the third embodiment further includes another regenerative capacitor 16 (hereinafter referred to as a "second regenerative capacitor 16") connected between the sixth end 154 of the regenerative capacitor 15 (hereinafter referred to as a "first regenerative capacitor 15") and the first DC terminal 31, which is a difference from the power converter 100 according to the first embodiment described above.

The second regenerative capacitor 16 is connected to the first regenerative capacitor 15 in series. Thus, in this power converter 100B, a series circuit of the second regenerative capacitor 16 and the first regenerative capacitor 15 is connected between the first DC terminal 31 and the second DC terminal 32. The capacitance of the second regenerative capacitor 16 is equal to the capacitance of the first regenerative capacitor 15. As used herein, the expression "the capacitance of the second regenerative capacitor 16 is equal to the capacitance of the first regenerative capacitor 15" refers to not only a situation where the capacitance of the second regenerative capacitor 16 is exactly equal to the capacitance of the first regenerative capacitor 15 but also a situation where the capacitance of the second regenerative capacitor 16 is equal to or greater than 95% and equal to or less than 105% of the capacitance of the first regenerative capacitor 15 as well.

In the power converter 100B according to the third embodiment, the voltage V15 across the first regenerative capacitor 15 (i.e., the potential at the sixth end 154 of the first regenerative capacitor 15) has a value calculated by dividing the voltage value Vd of the DC power supply E1 by two that is the number of the capacitors, namely, the second regenerative capacitor 16 and the first regenerative capacitor 15. Thus, the voltage V15 across the first regenerative capacitor 15 is approximately equal to Vd/2 while changing transiently but includes a ripple voltage involved with the U-, V-, and W-phase resonant currents.

The controller 50 of the power converter 100B according to the third embodiment operates in the same way as the controller 50 of the power converter 100 according to the first embodiment. Thus, the power converter 100B according to the third embodiment, as well as the power converter 100 according to the first embodiment, may detect a switching circuit 10 in which hard switching has occurred in the power converter circuit 11.

### (Fourth embodiment)

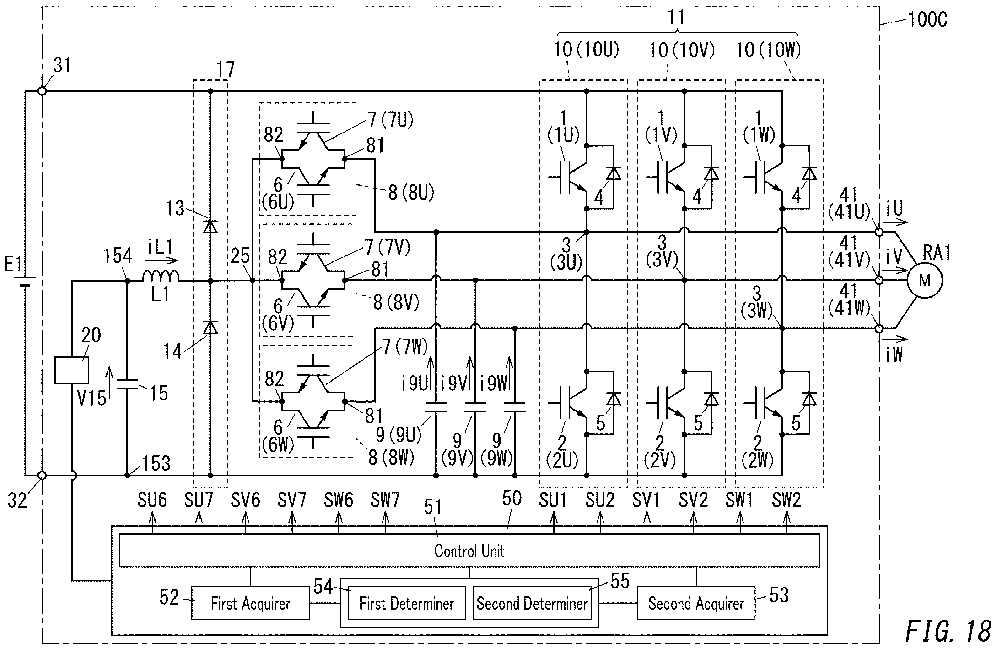

A power converter 100C according to a fourth embodiment will be described with reference to FIG. 18. In the following description, any constituent element of the power converter 100C according to the fourth embodiment, having the same function as a counterpart of the power converter 100 (refer to FIG. 1) according to the first embodiment described above, will be designated by the same reference numeral as that counterpart's, and description thereof will be omitted herein.

### (1) Configuration

The power converter 100C includes only one resonant inductor L1, which is a difference from the power converter 100 according to the first embodiment. In the power converter 100C, the resonant inductor L1 is shared in common by a plurality of resonant circuits. In the power converter 100C, a third end of the resonant inductor L1 is connected to the common connection node 25. The respective second ends 82 of the plurality of switches 8 are connected in common to the common connection node 25.

In the power converter 100C, the third end of the resonant inductor L1 is connected to the common connection node 25. The respective second ends 82 of the plurality of switches 8 are connected in common to the common connection node 25.

In addition, the power converter 100C includes only one protection circuit 17, which is another difference from the power converter 100 according to the first embodiment.

In the power converter 100C, a third diode 13 of the protection circuit 17 is connected between the common connection node 25 and the first DC terminal 31. In the third diode 13, the anode of the third diode 13 is connected to the common connection node 25. In the third diode 13, the cathode of the third diode 13 is connected to the first DC terminal 31. A fourth diode 14 of the protection circuit 17 is connected between the common connection node 25 and the second DC terminal 32. In the fourth diode 14, the anode of the fourth diode 14 is connected to the second DC terminal 32. In the fourth diode 14, the cathode of the fourth diode 14 is connected to the common connection node 25. Thus, the fourth diode 14 is connected to the third diode 13 in series.

### (2) Operation of power converter

In the power converter 100C, as well as in the power converter 100, the controller 50 also controls a plurality of (e.g., three) first switching elements 1, a plurality of (e.g., three) second switching elements 2, and a plurality of (e.g., three) switches 8. The (control unit 51 of the) controller 50 performs a basic operation and a shift control operation.

### (2.1) Basic operation

The basic operation performed by the controller 50 is the same as the operation performed by the controller 50 in the power converter 100 according to the first embodiment. The basic operation is an operation performed when resonant currents passing respectively through two or more switches 8 belonging to the plurality of switches 8 do not flow simultaneously through the resonant inductor L1.

### (2.2) Shift control operation

The shift control operation is an operation performed by the controller 50 when the controller 50 determines that resonant currents passing respectively through two or more switches 8 belonging to the plurality of switches 8 flow simultaneously.

When determining that resonant currents passing respectively through two switches 8 belonging to the plurality of switches 8 flow simultaneously through the resonant inductor L1, the controller 50 performs a shift control operation of shifting the high-level period of a control signal for one of the two switches 8 to prevent the resonant currents passing respectively through the two switches 8 from flowing simultaneously through the resonant inductor L1. As used herein, the expression "when determining that resonant currents passing respectively through two switches 8 belonging to the plurality of switches 8 flow simultaneously" means that it has been presumed in advance that the resonant currents respectively passing through the two switches 8 would flow simultaneously through the resonant inductor L1.

### (2.2.1) Determining whether two-phase resonant currents flow simultaneously

In the power converter 100C, the phases of three-phase (i.e., U-, V-, and W-phase) voltage instructions are different from each other by 120 degrees, but the instruction values of two-phase voltage instructions approach each other every electrical angle of 60 degrees and the duties of two-phase control signals approach each other (refer to regions A1, A2 shown in FIG. 9). Specifically, in the region A1 shown in FIG. 9, the duty of the U-phase control signal and the duty of the V-phase control signal become around 0.75. In the region A2 shown in FIG. 9, the duty of the U-phase control signal and the duty of the V-phase control signal become around 0.25. The polarity of the resonant current is the same as the polarity of the current iL1. In the region A1, the polarity of the resonant current is positive. In the region A2, the polarity of the resonant current is negative. In the region A1, the time lag between the time t1 (refer to FIG. 7) when the high-level period of the control signal SU6 to be applied to the first IGBT 6U begins and the time t5 (refer to FIG. 7) when the high-level period of the control signal SV6 to be applied to the first IGBT 6V begins becomes so short in one cycle time of the carrier signal that the U-phase resonant current and the V-phase resonant current may flow simultaneously through the resonant inductor L1. In the power converter 100C, the direction of the resonant current in the region A2 is reverse from that of the resonant current in the region A1 but the U-phase resonant current and the V-phase resonant current may flow simultaneously through the resonant inductor L1.

Supposing the capacitance of each of the plurality of resonant capacitors 9U, 9U, and 9W is Cr, if a U-phase current and a V-phase current flow simultaneously through the resonant inductor L1, a capacitor having a combined capacitance (= 2 × Cr) of the resonant capacitor 9U and the resonant capacitor 9V is connected to the resonant inductor L1 in series in an equivalent circuit. Thus, in the power converter 100C, if two-phase currents flow simultaneously through the resonant inductor L1, then the resonant frequency of a resonant circuit including the resonant inductor L1 changes compared to a situation where a single-phase current flows through the resonant inductor L1. Consequently, the power converter 100C may be unable to make zero-voltage soft switching.

### (2.2.2) When charging operation is performed on resonant capacitor

An exemplary boundary condition between a situation where the U-phase resonant current and the V-phase resonant current do not overlap with each other (i.e., do not flow simultaneously) and a situation where the U-phase resonant current and the V-phase resonant current overlap with each other (i.e., flow simultaneously) will be described with reference to FIG. 7.

In the power converter 100C (refer to FIG. 18), if the time lag ΔTuv between the time t3 when the high-level period of the control signal SU1 begins and the time t7 when the high-level period of the control signal SV1 begins is equal to or greater than (Tau + Tav + Td), then the U-phase resonant current and the V-phase resonant current do not overlap with each other. On the other hand, if the time lag ΔTuv is less than (Tau + Tav + Td), then the U-phase resonant current and the V-phase resonant current overlap with each other. That is to say, with a threshold value for the time lag ΔTuv set at (Tau + Tav + Td), for example, if the time lag ΔTuv is less than the threshold value, the controller 50 presumes that resonant currents corresponding to the two phases of the switching circuit 10U and the switching circuit 10V belonging to the plurality of switching circuits 10 would flow simultaneously through the resonant inductor L1. Note that this threshold value is only an example, and the threshold value may also be set at any other value. For example, with the error of the additional time Tau and the error of the additional time Tav taken into account, the threshold value may also be set at a value even larger than (Tau + Tav + Td). In addition, the above-described method for calculating the time lag ΔTuv to determine whether the two-phase resonant currents flow simultaneously is only an example and should not be construed as limiting. Rather, any other calculating method may also be adopted as long as a time lag corresponding to the time lag ΔTuv described above may be calculated. For example, as the time lag ΔTuv for use to determine whether the two-phase resonant currents flow simultaneously, a time lag between the time t2 when the high-level period of the control signal SU2 ends and the time t6 when the high-level period of the control signal SV2 ends may also be used.

In the power converter 100C, if the time lag between the time t3 when the high-level period of the control signal SU1 begins and the time t11 when the high-level period of the control signal SW1 begins is equal to or greater than (Tau + Taw + Td), then the U-phase resonant current and the W-phase resonant current do not overlap with each other. On the other hand, if the time lag is less than (Tau + Taw + Td), then the U-phase resonant current and the W-phase resonant current overlap with each other. That is to say, with a threshold value for the time lag set at (Tau + Taw + Td), for example, if the time lag is less than the threshold value, the controller 50 presumes that resonant currents corresponding to the two phases of the switching circuit 10U and the switching circuit 10W belonging to the plurality of switching circuits 10 would flow simultaneously through the resonant inductor L1. Note that this threshold value is only an example, and the threshold value may also be set at any other value. For example, with the error of the additional time Tau and the error of the additional time Taw taken into account, the threshold value may also be set at a value even larger than (Tau + Taw + Td). In addition, the above-described method for calculating the time lag to determine whether the two-phase resonant currents flow simultaneously is only an example and should not be construed as limiting. Rather, any other calculating method may also be adopted as long as a time lag corresponding to the time lag described above may be calculated. For example, as the time lag for use to determine whether the two-phase resonant currents flow simultaneously, a time lag between the time t2 when the high-level period of the control signal SU2 ends and the time t10 when the high-level period of the control signal SW2 ends may also be used.

In the power converter 100C, if the time lag between the time t7 when the high-level period of the control signal SV1 to be applied to the first switching element 1V of the switching circuit 10V begins and the time t11 when the high-level period of the control signal SW1 to be applied to the first switching element 1W of the switching circuit 10W begins is equal to or greater than (Tav + Taw + Td), then the V-phase resonant current and the W-phase resonant current do not overlap with each other. On the other hand, if the time lag is less than (Tav + Taw + Td), then the V-phase resonant current and the W-phase resonant current overlap with each other. That is to say, with a threshold value for the time lag set at (Tav + Taw + Td), for example, if the time lag is less than the threshold value, the controller 50 presumes that resonant currents corresponding to the two phases of the switching circuit 10V and the switching circuit 10W belonging to the plurality of switching circuits 10 would flow simultaneously through the resonant inductor L1. Note that this threshold value is only an example, and the threshold value may also be set at any other value. For example, with the error of the additional time Tav and the error of the additional time Taw taken into account, the threshold value may also be set at a value even larger than (Tav + Taw + Td). In addition, the above-described method for calculating the time lag to determine whether the two-phase resonant currents flow simultaneously is only an example and should not be construed as limiting. Rather, any other calculating method may also be adopted as long as a time lag corresponding to the time lag described above may be calculated. For example, as the time lag for use to determine whether the two-phase resonant currents flow simultaneously, a time lag between the time t6 when the high-level period of the control signal SV2 ends and the time t10 when the high-level period of the control signal SW2 ends may also be used.

### (2.2.3) When discharging operation is performed on resonant capacitor

When performing a discharging operation on the resonant capacitor 9, the controller 50 may also determine, using the same time lag and same threshold value as in the case of performing the charging operation on the resonant capacitor 9, whether two-phase resonant currents flow simultaneously.

For example, if the time lag between the beginning time of the high-level period of the control signal SU2 and the beginning time of the high-level period of the control signal SV2 is less than the threshold value (e.g., Tau + Tav + Td), then the controller 50 presumes that the U-phase resonant current and the V-phase resonant current would overlap with each other.

Also, if the time lag between the beginning time of the high-level period of the control signal SU2 and the beginning time of the high-level period of the control signal SW2 is less than the threshold value (e.g., Tau + Taw + Td), then the controller 50 presumes that the U-phase resonant current and the W-phase resonant current would overlap with each other.

Furthermore, if the time lag between the beginning time of the high-level period of the control signal SV2 and the beginning time of the high-level period of the control signal SW2 is less than the threshold value (e.g., Tav + Taw + Td), then the controller 50 presumes that the V-phase resonant current and the W-phase resonant current would overlap with each other.

### (2.2.4) Shift control operation to be performed when two-phase resonant currents are determined to flow simultaneously

To prevent resonant currents passing respectively through two switches 8 from flowing simultaneously through the resonant inductor L1, for example, the controller 50 performs a shift control operation including shifting the high-level period of a control signal for one of the two switches 8.

When performing the shift control, the controller 50 shifts the high-level period of a control signal for one of the two switches 8 to prevent the high-level periods of control signals to be respectively applied to the first switching element 1 and the second switching element 2 of one switching circuit 10 corresponding to the one switch 8 from changing their length. When shifting the high-level period of the control signal SU6 or SU7 to be applied to the switch 8U, for example, the controller 50 shifts the respective high-level periods of the control signals SU1 and SU2 but does not change the respective duties of the control signals SU1 and SU2 in one cycle of the carrier signal. In the same way, when shifting the high-level period of the control signal SV6 or SV7 to be applied to the switch 8V, for example, the controller 50 shifts the respective high-level periods of the control signals SV1 and SV2 but does not change the respective duties of the control signals SV1 and SV2 in one cycle of the carrier signal. In the same way, when shifting the high-level period of the control signal SW6 or SW7 to be applied to the switch 8W, for example, the controller 50 shifts the respective high-level periods of the control signals SW1 and SW2 but does not change the respective duties of the control signals SW1 and SW2 in one cycle of the carrier signal.

In the power converter 100C, if the controller 50 has performed the shift control to make soft switching of the first switching element 1, at a time when the control signal SU1, SV1 changes from the low-level period to the high-level period (i.e., at the end time of the dead time period Td corresponding to each of the U- and V-phases), for example, the voltage V2u, V2v across the second switching element 2U, 2V increases to Vd. That is to say, if the controller 50 has performed the shift control, then the resonant capacitor 9U, 9V is charged completely at the end time of the dead time period Td corresponding to each of the U- and V-phases. Thus, in the power converter 100C, if the controller 50 has performed the shift control, then the first switching element 1U, 1V is switched by zero-voltage soft switching.

In the example described above, an exemplary shift control to be performed by the controller 50 in a situation where the controller 50 has presumed in advance that a U-phase resonant current and a V-phase resonant current would flow simultaneously through the resonant inductor L1 has been described. However, this is only an example and should not be construed as limiting. For example, even if the controller 50 has presumed in advance that a V-phase resonant current and a W-phase resonant current would flow simultaneously through the resonant inductor L1 or even if the controller 50 has presumed in advance that a W-phase resonant current and a U-phase resonant current would flow simultaneously through the resonant inductor L1, zero-voltage soft switching may also be made by having the controller 50 perform the shift control.

In the power converter 100C, if the controller 50 has performed the shift control to make soft switching of the second switching element 2, at a time when the control signal SU2, SV2 changes from the low-level period to the high-level period (i.e., at the end time of the dead time period Td corresponding to each of the U- and V-phases), for example, the voltages V1u, V1v across the first switching elements 1U, 1V increase to Vd. That is to say, if the controller 50 has performed the shift control, then electricity is discharged completely from the resonant capacitors 9U, 9V at the end time of the dead time period Td corresponding to each of the U- and V-phases. Thus, in the power converter 100C, if the controller 50 has performed the shift control, then the second switching elements 2U, 2V are switched by zero-voltage soft switching.

In the example described above, an exemplary shift control to be performed by the controller 50 in a situation where the controller 50 has presumed in advance that a U-phase resonant current and a V-phase resonant current would flow simultaneously through the resonant inductor L1 has been described. However, this is only an example and should not be construed as limiting. For example, even if the controller 50 has presumed in advance that a V-phase resonant current and a W-phase resonant current would flow simultaneously through the resonant inductor L1 or even if the controller 50 has presumed in advance that a W-phase resonant current and a U-phase resonant current would flow simultaneously through the resonant inductor L1, zero-voltage soft switching may also be made by having the controller 50 perform the shift control.

### (2.3) Operations of first determiner and second determiner

The first determiner 54 operates in the same way as the first determiner 54 of the controller 50 included in the power converter 100 according to the first embodiment described above. The second determiner 55 operates in the same way as the second determiner 55 of the controller 50 included in the power converter 100 according to the first embodiment described above. Thus, if the first determiner 54 has determined that hard switching have occurred in the power converter circuit 11, then the second determiner 55 determines, based on the polarities of the plurality of load currents iU, iV, iW in a particular phase of the ripple voltage, in which of the plurality of switching circuits 10 hard switching has occurred.

### (3) Recapitulation

The power converter 100C according to the fourth embodiment includes a first determiner 54 for determining a switching state in the power converter circuit 11 based on a ripple voltage included in the voltage V15 across the regenerative capacitor 15 and the plurality of load currents iU, iV, iW supplied from the plurality of AC terminals 41. Thus, the power converter 100C according to the fourth embodiment may detect the switching state in the power converter circuit 11. In addition, the power converter 100C further includes a second determiner 55. If the first determiner 54 has determined that hard switching have occurred in the power converter circuit 11, then the second determiner 55 determines, based on the polarities of a plurality of load currents iU, iV, iW in a particular phase of the ripple voltage, in which of the plurality of switching circuits 10 hard switching has occurred. Thus, the power converter 100C according to the fourth embodiment may determine in which of the plurality of switching circuits 10 hard switching has occurred.

In addition, in the power converter 100C according to the fourth embodiment, the number of the resonant inductors L1 provided is one and the respective second ends 82 of the plurality of switches 8 are connected in common to the single resonant inductor L1. Thus, the power converter 100C according to the fourth embodiment may contribute to cutting down the number of components required and downsizing.

Furthermore, in the power converter 100C according to the fourth embodiment, when determining that resonant currents passing respectively through two switches 8 belonging to the plurality of switches 8 flow simultaneously through the single resonant inductor L1, the controller 50 performs the control of shifting the high-level period of a control signal for each of the two switches 8 to prevent the resonant currents respectively passing through the two switches 8 from flowing simultaneously through the resonant inductor L1. This allows the power converter 100C according to the fourth embodiment to make soft switching with more reliability.

### (4) Variations of fourth embodiment

### (4.1) First variation

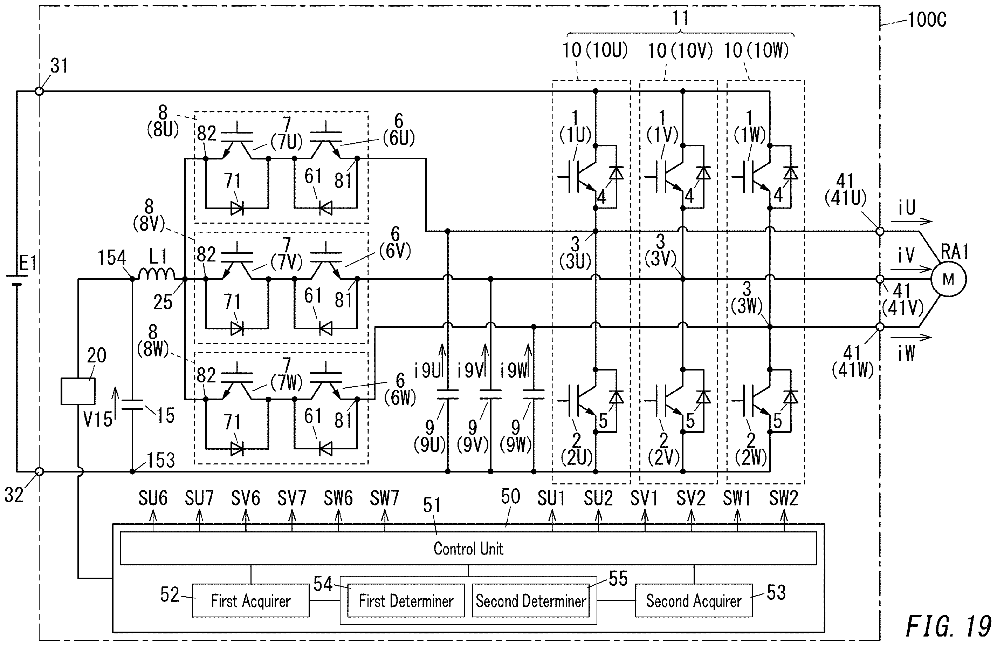

A power converter 100C according to a first variation will be described with reference to FIG. 19. In the following description, any constituent element of the power converter 100C according to the first variation, having the same function as a counterpart of the power converter 100C (refer to FIG. 18) according to the fourth embodiment described above, will be designated by the same reference numeral as that counterpart's, and description thereof will be omitted herein.

In the power converter 100C according to the first variation, in each of the plurality of switches 8, the first IGBT 6 and second IGBT 7 thereof are connected in anti-series. In the power converter 100B according to the first variation, in each of the plurality of switches 8, the collector terminal of the first IGBT 6 and the collector terminal of the second IGBT 7 are connected to each other, the emitter terminal of the first IGBT 6 is connected to the connection node 3 of a corresponding one of the plurality of switching circuits 10, and the emitter terminal of the second IGBT 7 is connected to the common connection node 25. In addition, each of the plurality of switches 8 further includes a diode 61 connected to the first IGBT 6 in antiparallel and a diode 71 connected to the second IGBT 7 in antiparallel.

In the power converter 100C according to the first variation, each of the first IGBT 6 and the second IGBT 7 may be replaced with either a MOSFET or a bipolar transistor. In that case, the diode 61 and diode 71 shown in FIG. 19 may be each replaced with, for example, either a parasitic diode of the replacement element or an element built in one chip of the replacement element. Also, in the power converter 100C according to the first variation, the diode 61 and the diode 71 do not have to be provided as external elements for the first IGBT 6 and the second IGBT 7, respectively, but may also be elements built in one chip.

The controller 50 operates in the same way as, for example, the controller 50 according to the fourth embodiment.

### (4.2) Second variation

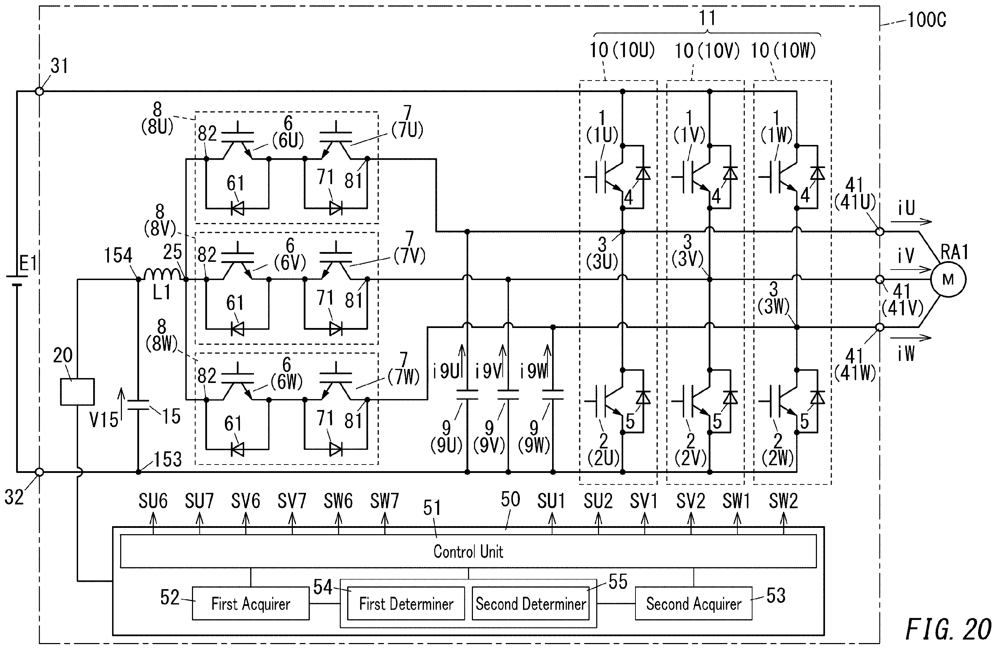

A power converter 100C according to a second variation will be described with reference to FIG. 20. In the following description, any constituent element of the power converter 100C according to the second variation, having the same function as a counterpart of the power converter 100C (refer to FIG. 18) according to the fourth embodiment described above, will be designated by the same reference numeral as that counterpart's, and description thereof will be omitted herein.

In the power converter 100C according to the second variation, in each of the plurality of switches 8, the first IGBT 6 and second IGBT 7 thereof are connected in anti-series. In the power converter 100C according to the second variation, in each of the plurality of switches 8, the emitter terminal of the first IGBT 6 and the emitter terminal of the second IGBT 7 are connected to each other, the collector terminal of the first IGBT 6 is connected to the common connection node 25, and the collector terminal of the second IGBT 7 is connected to the connection node 3 of a corresponding one of the plurality of switching circuits 10. In addition, each of the plurality of switches 8 further includes a diode 61 connected to the first IGBT 6 in antiparallel and a diode 71 connected to the second IGBT 7 in antiparallel.

In the power converter 100C according to the second variation, each of the first IGBT 6 and the second IGBT 7 may be replaced with either a MOSFET or a bipolar transistor. In that case, the diode 61 and diode 71 shown in FIG. 20 may be each replaced with, for example, either a parasitic diode of the replacement element (either a MOSFET or a bipolar transistor) or a diode element built in one chip of the replacement element including a MOSFET or a bipolar transistor. Also, in the power converter 100C according to the second variation, the diode 61 and the diode 71 do not have to be provided as external elements for the first IGBT 6 and the second IGBT 7, respectively, but may also be elements built in one chip.

The controller 50 operates in the same way as, for example, the controller 50 according to the fourth embodiment.

### (4.3) Third variation

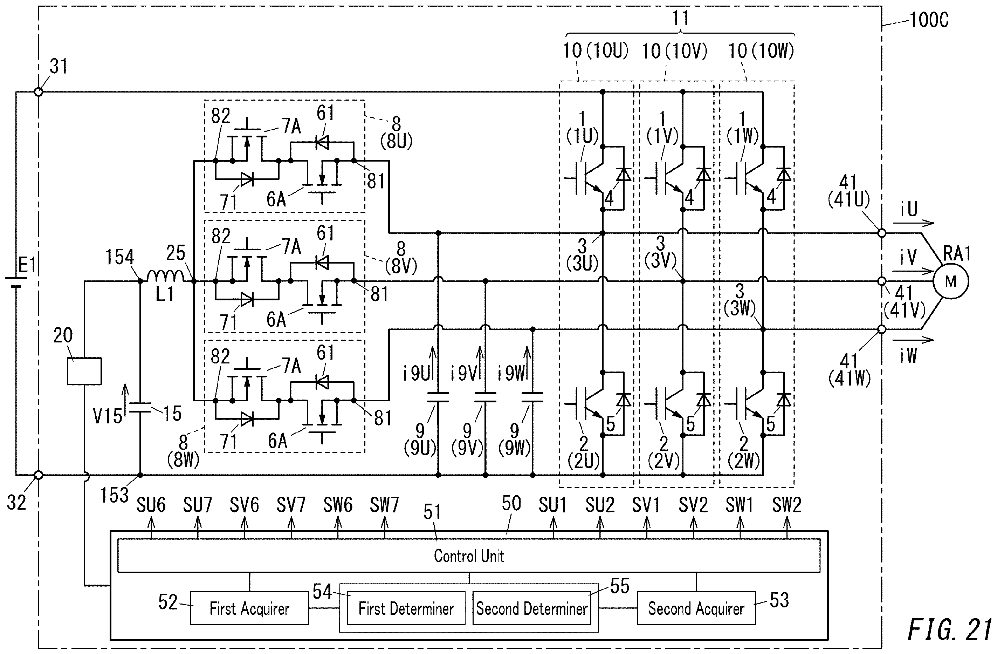

A power converter 100C according to a third variation will be described with reference to FIG. 21. In the following description, any constituent element of the power converter 100C according to the third variation, having the same function as a counterpart of the power converter 100C (refer to FIG. 18) according to the fourth embodiment described above, will be designated by the same reference numeral as that counterpart's, and description thereof will be omitted herein.

In the power converter 100C according to the third variation, in each of the plurality of switches 8, a first MOSFET 6A and a second MOSFET 7A are connected in anti-series. In the power converter 100C according to the third variation, in each of the plurality of switches 8, the drain terminal of the first MOSFET 6A and the drain terminal of the second MOSFET 7A are connected to each other. In addition, each of the plurality of switches 8 further includes a diode 61 connected to the first MOSFET 6A in antiparallel and a diode 71 connected to the second MOSFET 7A in antiparallel. In each of the plurality of switches 8, the source terminal of the second MOSFET 7A is connected to the common connection node 25. In each of the plurality of switches 8, the source terminal of the first MOSFET 6A is connected to the connection node 3 of a switching circuit 10 corresponding to the switch 8 including the first MOSFET 6A. Control signals SU6, SU7 are respectively applied from the controller 50 to the first MOSFET 6A and second MOSFET 7A of the switch 8U. Control signals SV6, SV7 are respectively applied from the controller 50 to the first MOSFET 6A and second MOSFET 7A of the switch 8V. Control signals SW6, SW7 are respectively applied from the controller 50 to the first MOSFET 6A and second MOSFET 7A of the switch 8W.

The controller 50 operates in the same way as, for example, the controller 50 according to the fourth embodiment.

### (4.4) Fourth variation

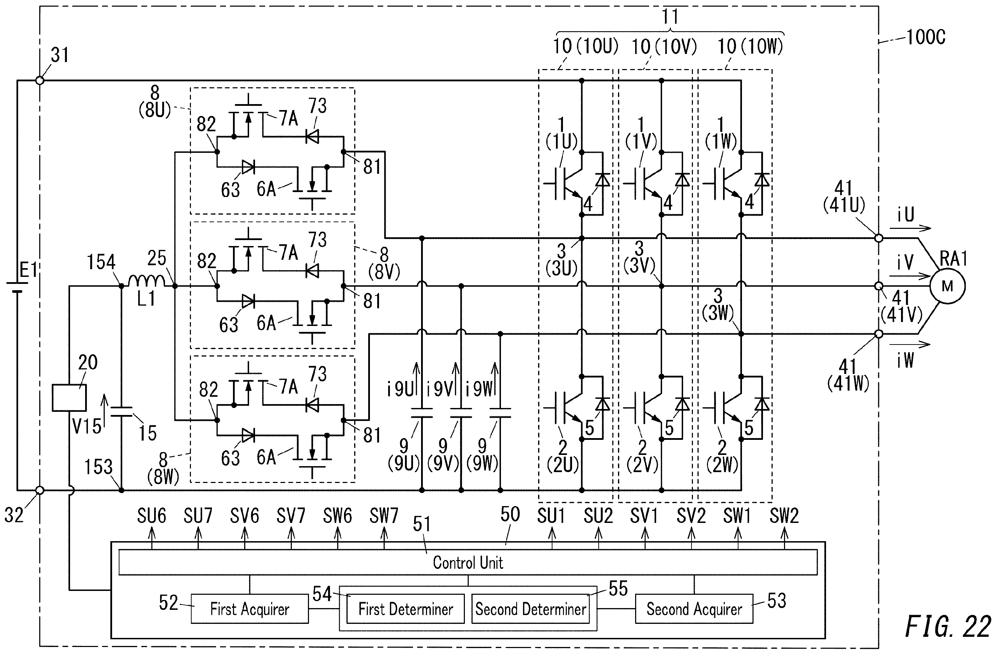

A power converter 100C according to a fourth variation will be described with reference to FIG. 22. In the following description, any constituent element of the power converter 100C according to the fourth variation, having the same function as a counterpart of the power converter 100C (refer to FIG. 18) according to the fourth embodiment described above, will be designated by the same reference numeral as that counterpart's, and description thereof will be omitted herein.

In the power converter 100C according to the fourth variation, in each of the plurality of switches 8, a diode 63 is connected to a first MOSFET 6A in series and a diode 73 is connected to a second MOSFET 7A in series. In the power converter 100B according to the fourth variation, a series circuit of the first MOSFET 6A and the diode 63 and a series circuit of the second MOSFET 7A and the diode 73 are connected to each other in antiparallel.

The controller 50 operates in the same way as, for example, the controller 50 according to the fourth embodiment.

### (Fifth embodiment)

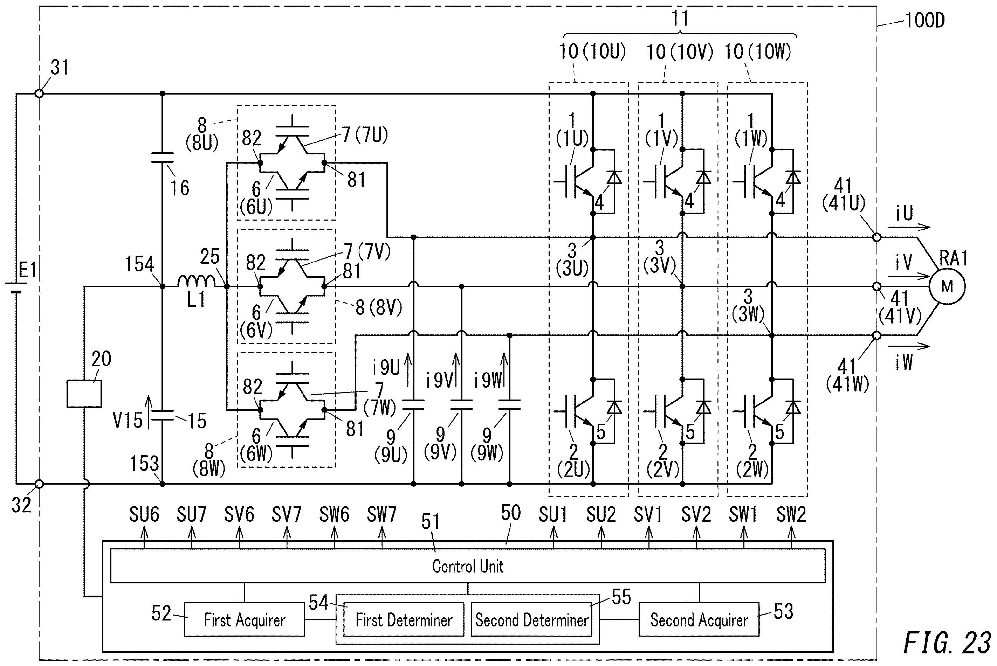

A power converter 100D according to a fifth embodiment will be described with reference to FIG. 23. In the following description, any constituent element of the power converter 100D according to the fifth embodiment, having the same function as a counterpart of the power converter 100C (refer to FIG. 18) according to the fourth embodiment described above, will be designated by the same reference numeral as that counterpart's, and description thereof will be omitted herein.

The power converter 100D according to the fifth embodiment further includes another regenerative capacitor 16 (hereinafter referred to as a "second regenerative capacitor 16") connected between the sixth end 154 of the regenerative capacitor 15 (hereinafter referred to as a "first regenerative capacitor 15") and the first DC terminal 31, which is a difference from the power converter 100C according to the fourth embodiment.

The second regenerative capacitor 16 is connected to the first regenerative capacitor 15 in series. Thus, in this power converter 100D, a series circuit of the second regenerative capacitor 16 and the first regenerative capacitor 15 is connected between the first DC terminal 31 and the second DC terminal 32. The capacitance of the second regenerative capacitor 16 is equal to the capacitance of the first regenerative capacitor 15. As used herein, the expression "the capacitance of the second regenerative capacitor 16 is equal to the capacitance of the first regenerative capacitor 15" refers to not only a situation where the capacitance of the second regenerative capacitor 16 is exactly equal to the capacitance of the first regenerative capacitor 15 but also a situation where the capacitance of the second regenerative capacitor 16 is equal to or greater than 95% and equal to or less than 105% of the capacitance of the first regenerative capacitor 15 as well.

In the power converter 100D according to the fifth embodiment, the voltage V15 across the first regenerative capacitor 15 (i.e., the potential at the sixth end 154 of the first regenerative capacitor 15) has a value calculated by dividing the voltage value Vd of the DC power supply E1 by two that is the number of the capacitors, namely, the second regenerative capacitor 16 and the first regenerative capacitor 15. Thus, the voltage V15 across the first regenerative capacitor 15 is approximately equal to Vd/2 but includes some ripple voltage. The ripple voltage is involved with the operation of charging the resonant capacitor 9 with electricity discharged from the first regenerative capacitor 15 and the operation of charging the first regenerative capacitor 15 with electricity discharged from the resonant capacitor 9.

The controller 50 of the power converter 100D according to the fifth embodiment operates in the same way as the controller 50 of the power converter 100C according to the fourth embodiment. Thus, the power converter 100D according to the fifth embodiment, as well as the power converter 100C according to the fourth embodiment, may detect the switching state in the power converter circuit 11. In addition, the power converter 100D according to the fifth embodiment, as well as the power converter 100C according to the fourth embodiment, may also detect a switching circuit 10 in which hard switching has occurred in the power converter circuit 11.

### (Other variations)

Note that the first to fifth embodiments and their variations described above are only exemplary ones of various embodiments of the present disclosure and their variations and should not be construed as limiting. Rather, the first to fifth exemplary embodiments and their variations may be readily modified in various manners depending on a design choice or any other factor without departing from the scope of the present disclosure.

For example, the operation performed by the controller 50 of the power converter 100C according to the fourth embodiment to "determine that two-phase resonant currents flow simultaneously" is not limited to the operation of "determining that two-phase resonant currents flow simultaneously" if the time lag described for the fourth embodiment is less than a threshold value.

Alternatively, the controller 50 may determine that two-phase resonant currents flow simultaneously if any one of the current difference between the U-phase load current iU and the V-phase load current iV, the current difference between the V-phase load current iV and the W-phase load current iW, or the current difference between the W-phase load current iW and the U-phase load current iU is less than a current difference threshold value.

Also, the power converter 100A according to the second embodiment, as well as the power converter 100C according to the fourth embodiment, may have a configuration including only one resonant inductor L1 instead of the three resonant inductors L1.

Still alternatively, the controller 50 may determine that "two-phase resonant currents flow simultaneously" if the electrical angle determined by calculation, or estimated, based on sensor information provided by a sensor device (such as an encoder or a resolver) for detecting the number of revolutions of a motor falls within a first rotational angle range (e.g., equal to or larger than 55 degrees and equal to or smaller than 65 degrees), or a second rotational angle range (e.g., equal to or larger than 115 degrees and equal to or smaller than 125 degrees), or a third rotational angle range (e.g., equal to or larger than 175 degrees and equal to or smaller than 185 degrees), or a fourth rotational angle range (e.g., equal to or larger than 235 degrees and equal to or smaller than 245 degrees), or a fifth rotational angle range (e.g., equal to or larger than 295 degrees and equal to or smaller than 305 degrees), or a sixth rotational angle range (e.g., equal to or larger than 355 degrees and equal to or smaller than 365 degrees).

For example, each of the plurality of first switching elements 1 and the plurality of second switching elements 2 does not have to be an IGBT but may also be a MOSFET. In that case, each of the plurality of first diodes 4 may also be replaced with, for example, a parasitic diode of a MOSFET serving as its corresponding first switching element 1. In addition, each of the plurality of second diodes 5 may also be replaced with, for example, a parasitic diode of a MOSFET serving as its corresponding second switching element 2. The MOSFET may be, for example, an Si-based MOSFET or an SiC-based MOSFET. Each of the plurality of first switching elements 1 and the plurality of second switching elements 2 may also be, for example, a bipolar transistor or a GaN-based GIT (gate injection transistor).

Optionally, in the power converters 100, 100A, 100B, 100C, 100D, if each of the plurality of resonant capacitors 9 has a relatively small capacitance, then the parasitic capacitors across the plurality of second switching elements 2 may also serve as the plurality of resonant capacitors 9 instead of providing the plurality of resonant capacitors 9 as separate elements.

Furthermore, the length of the dead time period Td does not have to be set to be as long as one resonant half cycle but may also be set to be different from one resonant half cycle.

The dead time period Td may also be set by a dead time generator circuit included in a gate driver integrated circuit (IC) provided separately from the controller 50. Alternatively, the controller 50 may include a gate driver IC and a dead time generator circuit included in the gate driver IC may set the dead time period Td.

Alternatively, the first peak P1 for use in the first determiner 54 may be one minimum value peak at which the ripple voltage included in the voltage V15 across the regenerative capacitor 15 reaches the minimum value Vmin, and the second peak P2 for use in the first determiner 54 may also be another minimum value peak at which the ripple voltage reaches the minimum value Vmin after the first peak P1.

Optionally, the particular phase for the second determiner 55 may be the phase of one minimum value peak at which the ripple voltage included in the voltage V15 across the regenerative capacitor 15 reaches the minimum value Vmin. In that case, if only one load current out of the plurality of load currents iU, iV, iW has positive polarity, then the second determiner 55 determines that hard switching have occurred in the switching circuit 10 corresponding to a load current having a phase lag of 120 degrees with respect to the one load current which belongs to the plurality of switching circuits 10.

Alternatively, the first peak P1 for use in the first determiner 54 may be one maximum value peak at which the ripple voltage included in the voltage V15 across the regenerative capacitor 15 reaches the maximum value Vmax, and the second peak P2 may be one minimum value peak at which the ripple voltage reaches the minimum value Vmin after the first peak P1. In that case, the prescribed period Ts may be, for example, one half cycle of the ripple voltage and the preset value is one.

Still alternatively, the first peak P1 for use in the first determiner 54 may be one minimum value peak at which the ripple voltage reaches the minimum value Vmin, and the second peak P2 may also be one maximum value peak at which the ripple voltage reaches the maximum value Vmax after the first peak P1.

Furthermore, the power converter 100, 100A, 100B, 100C, 100D does not have to be configured to output three-phase AC power but may also be configured to output multi-phase AC power in more than three phases. The preset value for use in the first determiner 54 may be determined appropriately according to the number of the switching circuits 10 included in the power converter circuit 11 which is in turn determined by the number of phases of the multi-phase AC power.

### (Aspects)

The foregoing description provides specific implementations for the following aspects of the present disclosure.

A power converter (100; 100B; 100C; 100D) according to a first aspect includes a first DC terminal (31) and a second DC terminal (32), a power converter circuit (11), a plurality of AC terminals (41), a plurality of switches (8), a plurality of resonant capacitors (9), at least one resonant inductor (L1), a regenerative capacitor (15), and a controller (50). The power converter circuit (11) includes a plurality of first switching elements (1) and a plurality of second switching elements (2). In the power converter circuit (11), a plurality of switching circuits (10), in each of which one of the plurality of first switching elements (1) and a corresponding one of the plurality of second switching elements (2) are connected one to one in series, are connected to each other in parallel. In the power converter circuit (11), the plurality of first switching elements (1) are connected to the first DC terminal (31), and the plurality of second switching elements (2) are connected to the second DC terminal (32). The plurality of AC terminals (41) are provided one to one for the plurality of switching circuits (10). Each of the plurality of AC terminals (41) is connected to a connection node (3) between the first switching element (1) and the second switching element (2) of a corresponding one of the plurality of switching circuits (10). The plurality of switches (8) are provided one to one for the plurality of switching circuits (10). Each of the plurality of switches (8) has a first end (81) and a second end (82). Each of the plurality of switches (8) has the first end (81) thereof connected to the connection node (3) between the first switching element (1) and the second switching element (2) of a corresponding one of the plurality of switching circuits (10). The plurality of resonant capacitors (9) are provided one to one for the plurality of switches (8). Each of the plurality of resonant capacitors (9) is connected between the first end (81) of a corresponding one of the plurality of switches (8) and the second DC terminal (32). The at least one resonant inductor (L1) has a third end and a fourth end. The third end of the at least one resonant inductor (L1) is connected to the second end (82) of a corresponding one of the plurality of switches (8). The regenerative capacitor (15) has a fifth end (153) and a sixth end (154). The fifth end (153) of the regenerative capacitor (15) is connected to the second DC terminal (32). The sixth end (154) of the regenerative capacitor (15) is connected to the fourth end of the at least one resonant inductor (L1). The controller (50) controls respective ON/OFF states of the plurality of first switching elements (1), the plurality of second switching elements (2), and the plurality of switches (8). The controller (50) includes a first determiner (54) and a second determiner (55). The first determiner (54) determines a switching state in the power converter circuit (11) based on a ripple voltage included in a voltage (V15) across the regenerative capacitor (15) and a plurality of load currents (iU, iV, iW) supplied from the plurality of AC terminals (41). When the first determiner (54) has determined that hard switching have occurred in the power converter circuit (11), the second determiner (55) determines, based on polarities of the plurality of load currents (iU, iV, iW) in a particular phase (at a first timing of generation tg1) of the ripple voltage, in which of the plurality of switching circuits (10) hard switching has occurred.

This aspect allows for detecting a switching circuit (10) in which hard switching has occurred in the power converter circuit (11).

A power converter (100A) according to a second aspect includes a first DC terminal (31) and a second DC terminal (32), a power converter circuit (11), a plurality of AC terminals (41), a plurality of switches (8), a plurality of resonant capacitors (9), at least one resonant inductor (L1), a regenerative capacitor (15), and a controller (50). The power converter circuit (11) includes a plurality of first switching elements (1) and a plurality of second switching elements (2). In the power converter circuit (11), a plurality of switching circuits (10), in each of which one of the plurality of first switching elements (1) and a corresponding one of the plurality of second switching elements (2) are connected one to one in series, are connected to each other in parallel. In the power converter circuit (11), the plurality of first switching elements (1) are connected to the first DC terminal (31), and the plurality of second switching elements (2) are connected to the second DC terminal (32). The plurality of AC terminals (41) are provided one to one for the plurality of switching circuits (10). Each of the plurality of AC terminals (41) is connected to a connection node (3) between the first switching element (1) and the second switching element (2) of a corresponding one of the plurality of switching circuits (10). The plurality of switches (8) are provided one to one for the plurality of switching circuits (10). Each of the plurality of switches (8) has a first end (81) and a second end (82). Each of the plurality of switches (8) has the first end (81) thereof connected to the connection node (3) between the first switching element (1) and the second switching element (2) of a corresponding one of the plurality of switching circuits (10). The plurality of resonant capacitors (9) are provided one to one for the plurality of switches (8). Each of the plurality of resonant capacitors (9) is connected between the first end (81) of a corresponding one of the plurality of switches (8) and the second DC terminal (32). The at least one resonant inductor (L1) has a third end and a fourth end. The third end of the at least one resonant inductor (L1) is connected to the second end (82) of a corresponding one of the plurality of switches (8). The regenerative capacitor (15) has a fifth end (153) and a sixth end (154). The fifth end (153) of the regenerative capacitor (15) is connected to the second DC terminal (32). The sixth end (154) of the regenerative capacitor (15) is connected to the fourth end of the at least one resonant inductor (L1). The controller (50) controls respective ON/OFF states of the plurality of first switching elements (1), the plurality of second switching elements (2), and the plurality of switches (8). The controller (50) includes a first determiner (54) and a second determiner (55A). The first determiner (54) determines a switching state in the power converter circuit (11) based on a ripple voltage included in a voltage (V15) across the regenerative capacitor (15) and a plurality of load currents (iU, iV, iW) supplied from the plurality of AC terminals (41). When the first determiner (54) has determined that hard switching have occurred in the power converter circuit (11), the second determiner (55A) determines, based on control signals to be respectively applied to the plurality of switches (8), in which of the plurality of switching circuits (10) hard switching has occurred.

This aspect allows for detecting a switching circuit (10) in which hard switching has occurred in the power converter circuit (11).

In a power converter (100; 100B; 100C; 100D) according to a third aspect, which may be implemented in conjunction with the first aspect, the particular phase (first timing of generation tg1) is a phase of one maximum value peak belonging to a plurality of maximum value peaks of the ripple voltage. The second determiner (55) determines, when the polarity of only one load current belonging to the plurality of load currents (iU, iV, iW) is negative, that hard switching have occurred in one switching circuit (10) corresponding to a load current having a phase lag of 120 degrees with respect to the one load current which belongs to the plurality of switching circuits (10).

In a power converter (100; 100B; 100C; 100D) according to a fourth aspect, which may be implemented in conjunction with the first aspect, when the polarities of only two load currents belonging to the plurality of load currents (iU, iV, iW) are negative, the second determiner (55) determines, based on one load current, having the greater absolute value, of the two load currents, that hard switching have occurred in one switching circuit (10) corresponding to a load current having a phase lag of 120 degrees with respect to the one load current which belongs to the plurality of switching circuits (10).

This aspect allows for detecting one switching circuit (10) out of the two switching circuits (10) in which hard switching has occurred in the power converter circuit (11).

In a power converter (100; 100A; 100B; 100C; 100D) according to a fifth aspect, which may be implemented in conjunction with any one of the first to fourth aspects, the first determiner (54) determines, when the voltage (V15) across the regenerative capacitor (15) is constant, that hard switching have occurred in each of the plurality of switching circuits (10).

This aspect allows for detecting, when hard switching has occurred in every switching circuit (10) of the power converter circuit (11), every switching circuit (10) in which hard switching has occurred.

In a power converter (100; 100A; 100B; 100C; 100D) according to a sixth aspect, which may be implemented in conjunction with any one of the first to fifth aspects, the first determiner (54) determines, when a predetermined condition is satisfied, that hard switching have occurred in the power converter circuit (11). The predetermined condition is a condition that the number of intersections (B1) between any two load currents, belonging to the plurality of load currents (iU, iV, iW), during a prescribed period (Ts) be larger than a preset value. The prescribed period (Ts) is a period between a first timing of generation (tg1) of a first peak (P1) of the ripple voltage and a second timing of generation (tg2) of a second peak (P2) of the ripple voltage.

This aspect allows for detecting, when hard switching has occurred in at least one of the plurality of first switching elements (1) and the plurality of second switching elements (2), that hard switching has occurred in the power converter circuit (11).

In a power converter (100; 100A; 100B; 100C; 100D) according to a seventh aspect, which may be implemented in conjunction with the sixth aspect, the first peak (P1) is one maximum value peak at which the ripple voltage reaches a maximum value (Vmax) and the second peak (P2) is another maximum value peak at which the ripple voltage reaches the maximum value (Vmax) after the first peak (P1).

In a power converter (100C; 100D) according to an eighth aspect, which may be implemented in conjunction with any one of the first to seventh aspects, the at least one resonant inductor (L1) is a single resonant inductor (L1), and the respective second ends (82) of the plurality of switches (8) are connected in common to the single resonant inductor (L1).

This aspect allows the number of resonant inductors (L1) provided to be reduced to one, thus contributing to downsizing.

### Reference Signs List

1 First Switching Element
2 Second Switching Element
3 Connection Node
8 Switch
81 First End
82 Second End
9 Resonant Capacitor
10 Switching Circuit
11 Power Converter Circuit
15 Regenerative Capacitor
153 Fifth End
154 Sixth End
31 First DC Terminal
32 Second DC Terminal
41 AC Terminal
50 Controller
54 First Determiner
55, 55A Second Determiner
100, 100A, 100B, 100C; 100D Power Converter
B1 Intersection
iU, iV, iW Output Current (Load Current)
L1 Resonant Inductor
P1 First Peak
P2 Second Peak
RA1 AC Load
SU1, SU2, SU6, SU7 Control Signal
SV1, SV2, SV6, SV7 Control Signal
SW1, SW2, SW6, SW7 Control Signal
Ts Prescribed Period
tg1 First Timing of Generation
tg2 Second Timing of Generation
V15 Voltage

## Claims

1. A power converter comprising:
a first DC terminal and a second DC terminal;
a power converter circuit including a plurality of first switching elements and a plurality of second switching elements, the power converter circuit being implemented as a parallel connection of a plurality of switching circuits in each of which one of the plurality of first switching elements and a corresponding one of the plurality of second switching elements are connected one to one in series, the plurality of first switching elements being connected to the first DC terminal, the plurality of second switching elements being connected to the second DC terminal;
a plurality of AC terminals provided one to one for the plurality of switching circuits, each of the plurality of AC terminals being connected to a connection node between the first switching element and the second switching element of a corresponding one of the plurality of switching circuits;
a plurality of switches provided one to one for the plurality of switching circuits, each of the plurality of switches having a first end and a second end, each of the plurality of switches having the first end thereof connected to the connection node between the first switching element and the second switching element of a corresponding one of the plurality of switching circuits;
a plurality of resonant capacitors provided one to one for the plurality of switches, each of the plurality of resonant capacitors being connected between the first end of a corresponding one of the plurality of switches and the second DC terminal;
at least one resonant inductor having a third end and a fourth end, the third end of the at least one resonant inductor being connected to the second end of a corresponding one of the plurality of switches;
a regenerative capacitor having a fifth end and a sixth end, the fifth end of the regenerative capacitor being connected to the second DC terminal, the sixth end of the regenerative capacitor being connected to the fourth end of the at least one resonant inductor; and
a controller configured to control respective ON/OFF states of the plurality of first switching elements, the plurality of second switching elements, and the plurality of switches,
the controller including:
a first determiner configured to determine a switching state in the power converter circuit based on a ripple voltage included in a voltage across the regenerative capacitor and a plurality of load currents supplied from the plurality of AC terminals; and
a second determiner configured to, when the first determiner has determined that hard switching have occurred in the power converter circuit, determine, based on polarities of the plurality of load currents in a particular phase of the ripple voltage, in which of the plurality of switching circuits hard switching has occurred.

2. A power converter comprising:
a first DC terminal and a second DC terminal;
a power converter circuit including a plurality of first switching elements and a plurality of second switching elements, the power converter circuit being implemented as a parallel connection of a plurality of switching circuits in each of which one of the plurality of first switching elements and a corresponding one of the plurality of second switching elements are connected one to one in series, the plurality of first switching elements being connected to the first DC terminal, the plurality of second switching elements being connected to the second DC terminal;
a plurality of AC terminals provided one to one for the plurality of switching circuits, each of the plurality of AC terminals being connected to a connection node between the first switching element and the second switching element of a corresponding one of the plurality of switching circuits;
a plurality of switches provided one to one for the plurality of switching circuits, each of the plurality of switches having a first end and a second end, each of the plurality of switches having the first end thereof connected to the connection node between the first switching element and the second switching element of a corresponding one of the plurality of switching circuits;
a plurality of resonant capacitors provided one to one for the plurality of switches, each of the plurality of resonant capacitors being connected between the first end of a corresponding one of the plurality of switches and the second DC terminal;
at least one resonant inductor having a third end and a fourth end, the third end of the at least one resonant inductor being connected to the second end of a corresponding one of the plurality of switches;
a regenerative capacitor having a fifth end and a sixth end, the fifth end of the regenerative capacitor being connected to the second DC terminal, the sixth end of the regenerative capacitor being connected to the fourth end of the at least one resonant inductor; and
a controller configured to control respective ON/OFF states of the plurality of first switching elements, the plurality of second switching elements, and the plurality of switches,
the controller including:
a first determiner configured to determine a switching state in the power converter circuit based on a ripple voltage included in a voltage across the regenerative capacitor and a plurality of load currents supplied from the plurality of AC terminals; and
a second determiner configured to, when the first determiner has determined that hard switching have occurred in the power converter circuit, determine, based on control signals to be respectively applied to the plurality of switches, in which of the plurality of switching circuits hard switching has occurred.

3. The power converter of claim 1, wherein
the particular phase is a phase of one maximum value peak belonging to a plurality of maximum value peaks of the ripple voltage, and
the second determiner is configured to, when polarity of only one load current belonging to the plurality of load currents is negative, determine that hard switching have occurred in one switching circuit corresponding to a load current having a phase lag of 120 degrees with respect to the one load current which belongs to the plurality of switching circuits.

4. The power converter of claim 1, wherein
the second determiner is configured to, when polarities of only two load currents belonging to the plurality of load currents are negative, determine, based on one load current, having the greater absolute value, of the two load currents, that hard switching have occurred in one switching circuit corresponding to a load current having a phase lag of 120 degrees with respect to the one load current which belongs to the plurality of switching circuits.

5. The power converter of any one of claims 1 to 4, wherein
the first determiner is configured to, when the voltage across the regenerative capacitor is constant, determine that hard switching have occurred in each of the plurality of switching circuits.

6. The power converter of any one of claims 1 to 5, wherein
the first determiner is configured to, when a predetermined condition is satisfied, determine that hard switching have occurred in the power converter circuit,
the predetermined condition is a condition that a numerical number of intersections between any two load currents, belonging to the plurality of load currents, during a prescribed period be larger than a preset value, and
the prescribed period is a period between a first timing of generation of a first peak of the ripple voltage and a second timing of generation of a second peak of the ripple voltage.

7. The power converter of claim 6, wherein
the first peak is one maximum value peak at which the ripple voltage reaches a maximum value and the second peak is another maximum value peak at which the ripple voltage reaches the maximum value after the first peak.

8. The power converter of any one of claims 1 to 7, wherein
the at least one resonant inductor is a single resonant inductor, and
the respective second ends of the plurality of switches are connected in common to the single resonant inductor.
